# EUROPEAN PATENT SPECIFICATION

(11) **EP 2 162 574 B1**
(45) Date of publication and mention of the grant of the patent: **05.09.2012**
(21) Application number: 08846174.4
(22) Date of filing: 03.07.2008
(51) Int. Cl.: D01F 1/10, C08K 5/00, D01F 2/10, C08B 9/00

(54) **A VISCOSE FIBER WITH MODIFIED PROPERTY AND A PROCESS FOR MAKING THEREFOR**
VISKOSEFASER MIT VERÄNDERTEN EIGENSCHAFTEN UND VERFAHREN ZU IHRER HERSTELLUNG
FIBRE DE VISCOSE AYANT UNE PROPRIÉTÉ MODIFIÉE ET SON PROCÉDÉ DE FABRICATION

(30) Priority: 03.07.2007 IN MU12592007
(43) Date of publication of application: 17.03.2010
(73) Proprietor: Aditya Birla Science & Technology CO. LTD., Mumbai 400 025, Maharashtra (IN)
(72) Inventor: LODHA, Preeti, Mumbai 400 025, Maharashtra (IN); KAPOOER, Bir, Mumbai 400 025, Maharashtra (IN); MAHAJAN, Tushar, Mumbai 400 025, Maharashtra (IN)
(74) Representative: Isarpatent
(86) International application number: PCT/IN2008/000422
(87) International publication number: WO 2009/057134

(56) References cited:
- WO-A1-00/26447
- WO-A1-03/027365
- WO-A2-2005/017247
- US-A- 4 756 958
- US-A- 5 731 083

## Description

### Field of the invention

The present invention relates to textile fibers.

### Background of the invention

The term "fiber" or "textile fiber" means a substance which is capable of being spun into a yarn or made into a fabric by bonding or by interlacing in a variety of methods including weaving, knitting, braiding, felting, twisting, or webbing, and which is the basic structural element of textile products.

Fibers are classified on the basis of their length such as short fibers or staple fiber and long fibers or filament fiber. The fibers can also be classified on the basis of their origin such as natural fibers and man-made fibers. The term natural fibers means any fiber that exists as such in the natural state e.g. vegetable fibers or wood fibers. The other type of fibers is obtained from chemical substances. These are called man made fibers. They are rayon, polyester, nylon, acrylic (cashmilon) and the like.

For centuries, mankind has relied upon various plants and animals to provide raw materials for fabrics and clothing. In recent times, the industrialization and scientific advancement has provided several improved materials having far superior properties, particularly suitable for clothing.

Rayon was the first manufactured fiber. The term rayon was adopted by the textile industry. Unlike other man-made fibers, rayon is not synthetic. It is obtained from wood pulp, a relatively cheap source, a naturally occurring, cellulose based material. Some of the reasons for popularity and success of Rayon in clothing industry include its low cost, diversity, biodegradability and ability to provide comfort. Rayon is moisture absorbent (more so than cotton), breathable, comfortable to wear, and easily dyed in vivid colors. Rayon does not build up static electricity, nor does it pill unless the fabric is made from short, low-twist yarns. Rayon is comfortable, soft to the skin, and has moderate dry strength and abrasion resistance. Like other cellulosic fibers, it is not resilient, which means that it wrinkles. One of rayon's strengths is its versatility and ability to blend easily with many fibers. Viscose rayon fibers are highly absorbent, soft and comfortable and are easy to dye.

Four major types or modifications of rayon that are available include regular rayon, high weight modulus rayon, high tenacity rayon and cupramonium rayon. Regular rayon is also called as a viscose rayon and has the largest market share.

Typical process of manufacture of Viscose rayon fibers involves the following steps:
- Steeping: Cellulose obtained from wood pulp is treated with strong alkalis at a temperature in the range of 18 to 25°C in order to swell the cellulose fibers and to convert cellulose to alkali cellulose.
- Shredding: The alkali cellulose is shredded mechanically to yield finely divided particles.
- Aging: The alkali cellulose is aged under controlled conditions of time and temperature to depolymerize the cellulose. The reduction of the cellulose is done to get a viscose solution of right viscosity and cellulose concentration.

- Xanthation: The aged alkali cellulose is allowed to react with Carbon disulphide under controlled temperature to form cellulose xanthate. The cellulose xanthate is dissolved in dilute sodium hydroxide solution to obtain a viscous solution called "viscose".
- Filtering: Viscose so obtained is filtered to remove undissolved materials that disrupt the spinning process.
- Degassing: Bubbles of air entrapped in the viscose are removed prior to extrusion.
- Wet spinning: Production of Viscose Rayon filament: The viscose solution is metered through a spinnerette into a spin bath containing sulphuric acid and sodium sulphate, zinc sulphate. Once the cellulose xanthate is neutralized and acidified, rapid coagulation of the rayon filaments occurs then it is followed by simultaneous stretching and decomposition of cellulose xanthate to regenerate cellulose with removal of water and other constituents in the spin bath.
- Drawing: The rayon filaments are stretched while the cellulose chains are relatively mobile. This causes the chains to stretch out and orient along the fiber axis.
- Washing: Water soluble impurities and other salts are removed from freshly regenerated rayon.

Viscose rayon fibers are commonly used in apparel (such as accessories, dresses, jackets, linings, millinery, slacks, sport shirts, sportswear, suits, ties, work clothes), home furnishings (such as bedspreads, blankets, curtains, draperies, sheets, slipcovers, tablecloths, upholstery) and other industrial areas (such as industrial products, medical and surgical products, non woven products, tire cord and the like).

From the spun or filament yarn, fabric is formed by knitting or weaving operations. Knitted fabrics can be made by using hooked needles to interlock one or more sets of yarns through a set of loops. The loops may be either loosely or closely constructed, depending on the purpose of the fabric. Knitted fabrics can be used for hosiery, underwear, sweaters, slacks, suits, coats, rugs and other home furnishings. Knitting is performed using either weft or warp processes.

Some typical preparations that are involved in the weaving operations are warping, slashing or sizing. Sizing agents are added to the yarn by solution or pad/dry techniques. Differences in raw materials, processing chemicals, fiber diameter, post treatments and blend ratios can be manipulated to produce a fiber having customized properties suitable for desired application. It is often desired that the rayon fabrics possess typical properties such as thermal stability, ability to retain perfumes, antibacterial properties and the like. These properties are essential in several industrial as well as household applications. There has been a considerable interest in developing such materials. In order to impart various desirable properties to the fabric as mentioned above to the fabric, several constituents with various properties are added. Such constituents include antimicrobial agents, deodorizing agents, antistatic agents, perfumes. Besides such specific constituents, generic constituents for improving overall quality of the fabric, such as sizing agents, antimicrobial constituents for increasing yarn softness and pliability are also added.

### Prior Art:

WO2008030648 discloses a temperature regulating, polymer containing fabric and a suspension formulation used in preparation of such fibers. The suspension comprises a solvent and plurality of microcapsules containing phase-change material. The suspension is used for incorporating the microcapsules in the fabric. The microcapsules comprise a shell composed of acrylic acid and their derivatives and a core which is composed of a phase change material having a latent heat in a range between 80 J/g and 400 J/gm and a transition temperature in the range of 20°C-50°C.

An encapsulated phase change material comprising: a hollow shell defining an internal cavity; and a phase change composition positioned in the internal cavity is described and claimed in United States Patent No. 6,689,466. The phase change composition comprises a phase change material and a thermal stabilizer. Said composition is used or incorporated in a variety of processes e.g., melt spinning processes, extrusion processes, injection molding processes to form articles having enhanced reversible thermal properties.

United States Patent Application no. 20070026228 discloses cellulosic fibers having enhanced reversible thermal properties and applications of such cellulosic fibers. The cellulosic fibers include a fiber body including a cellulosic material and a set of microcapsules dispersed in the cellulosic material. The set of microcapsules contain a phase change material having a latent heat of at least 40 J/g and a transition temperature in the range of 0°C-100°C. The phase change material provides thermal regulation based on absorption and release of the latent heat at the transition temperature.

US 5985301 discloses a process of producing an antibacterial fiber product which involves the method step of solvent spinning for incorporating an inorganic antibacterial silver in the cellulose fiber during its preparation. Another US patent 5405644 discloses a similar process employing inorganic antimicrobial agents which additionally involves the use of discoloring inhibitive agent for preventing possible discoloration of the fabric.

Another method of imparting multiple properties such as oil-repellency, soil-releasing properties and anti-bacterial property to the fabric is disclosed in US 5968599 which involves dipping the mixed or blended fabric in treating solution comprising the antimicrobial constituent like 1 to 10% weight of phenolic antibacterial agent.

The process as disclosed in US 6368361 involves contacting and immersing the fiber in an aqueous phase containing a cationic surfactant with a quaternary ammonium salt group, a water-soluble protein, and an alkaline compound are dissolved. The fiber is then separated from the aqueous phaseand immersed in another aqueous phase containing tea polyphenol which is an antimicrobial agent.

A two-stage process comprising a first stage treatment with a water soluble salt of a transition metal and an alkali and a second stage treatment with a solution of a bisbiguanide compound, thereby forming a bond between the cellulose fibers, the transition metal and the bisbiguanide compound is described in US patent 5856248 for improving the properties of the cellulosic fiber.

4,784,909 discloses an anti-fungus, deodorant fiber material obtained by blending two types of fibers containing different antimicrobial constituents.

US Patent 5652049 discloses a composite non-woven fabric comprising: a first non-woven web layer comprising antibacterial fibers and a second non-woven web layer disposed superposedly adjacent the first web layer.

A composite textile fabric involving a blend of two fabric layers wherein one of the fabric layers exhibits antimicrobial properties is disclosed in US Patent 6194332. Similarly a yarn comprising plurality of fibers with different properties is disclosed in US patent Application 20070148449.

US Patent 5707736 discloses material like fabric, yarn which contains releasable anti-microbial agent which is released when the material is brought in contact with moist surface. The process involves the use of a water soluble amine salt anti-microbial agent.

US patent 6436419 discloses a process that involves dyeing a polymer with an acid dye to form a dye coated polymer, and attaching an antimicrobial agent like quaternary ammonium salt, thereby making said polymer antimicrobial.

U.S. patent application 20040247653 discloses a process of preparing an antimicrobial and antiviral polymeric material which involves embedding microscopic water insoluble powder particles of ionic copper oxide.

US patent 6712121 discloses a method for forming an antimicrobially-treated fabric, which involves preparation of antimicrobially-treated cellulosic fibrous material and hydraulically entangling such material with a non-woven substrate followed by drying.

The process as described in US Patent Application 20070006391 involves the use of metal(copper, silver, gold, tin, zinc )complexed with a complexing polymer, as an antimicrobial agent. The antimicrobial composition that is used as an antimicrobial constituent does not contain surfactants.

Cellulose fibers and products made there from specifically treated to absorb body secretions are disclosed in US Patent 5856248. The two stage process as described in said US patent involves chemical treatment of the cellulose fibers with a water soluble salt of transition metal alkali and chlorhexidine.

A yarn comprising plurality of metal coated fibers with different properties such as anti-static, anti-odor, and anti-microbial properties is disclosed in US patent Application 20070148449.

US 7012053 discloses a process for producing treated fabric which involves application of composition, comprising fabric care additive, perfume, color restoring agent and antimicrobial agent by means of spraying, soaking or dipping.

Another US 6670317 discloses process of applying fabric care composition which involves contacting fibers with composition comprising lipophilic fluid and perfume.

US 5656333 discloses a method of producing an absorbent nonwoven article which comprises coating of fibers with binder containing colorants, softeners, fragrances, fillers and bactericidal agents.

US 6080208 discloses a method for increasing the sun protection factor of the textile material by treating fiber material with the disclosed compound in specific concentration with the addition of other additives such as fluorescent whitening agent , perfume, colouring dye, opacifier, bactericide, fabric care ingredient, anti-gelling agent and corrosion inhibitor.

A process for producing deodorizing fibers comprising contacting fiber with a colloidal solution of copper hydroxide and/or zinc hydroxide is disclosed in US 5049159.

US 6335075 discloses a multilayer carpet having a deodorizing function. Deodorant is applied by spraying or foaming on one of the layers while it is kneaded on the other layers.

Another method of imparting multiple properties to the fabric is disclosed in US 6806213 which involves incorporation of aqueous solution comprising fragrance material, moisturizing agent and surfactant into the fiber.

WO 2000/026447 describes a process for finishing regenerated cellulose fibers with an anti-microbial and/or antifungal agent or a mixture thereof wherein in the first step, a formulation comprising an anti-microbial agent and one or more surface active agents are added to the soluble form of the fibers prior to regeneration and in a second step this mixture is extruded from a spinneret to form the regenerated fiber.

WO 2005/017247 discloses cellulosic fibers having enhanced reversible thermal properties and methods of forming such cellulosic fibers, wherein the cellulosic fiber can include a fiber body of an elongated member which includes a cellulosic material and a temperature regulating material dispersed within the cellulosic material.

WO 2003/027365 relates to a multi-component fiber having enhanced reversible thermal properties and methods of manufacturing thereof, wherein the multi-component fiber comprises a fiber body formed from a plurality of elongated members, at least one of the elongated members comprising a temperature regulating material dispersed therein.

US 4 756 958 describes a fiber with integral microspheres filled with phase change material or plastic crystals with enhanced thermal properties at predetermined temperatures.

Earlier known compositions used in preparation of property-modified fabrics such as with thermoregulatory properties, antimicrobial properties, and perfumed properties mainly involved conventional methods like spraying, solvent spinning the antimicrobial constituents on the fabric or comprise making discrete microcapsules with shells which in turn contain the phase agents with or without the stabilizers. However, such compositions and methods employing them suffer from several disadvantages which include adverse effects on the tensile strength of the fiber, change in visual appearance of the fabric, increased time lag for adapting with the changing temperature, decreased sensitivity of the phase changing agent on account of encapsulation. There is thus felt a need for a process of incorporating additives to fabric which overcomes these shortcomings.

### Objects of the Invention:

It is an object of this invention to provide property-modified viscose products, wherein at least one property modifying constituent is incorporated into the body of the fiber.

Another object of this invention is to provide a process of incorporating thermoregulatory constituents into viscose fibers which ensures uniform distribution of the thermoregulatory constituent throughout the fiber length.

Yet another object of this invention is to provide thermoregulatory viscose fibers wherein the thermoregulatory constituents are retained in the viscose product over a prolonged period of time.

Yet another object of this invention is to provide a process of incorporating thermoregulatory constituents to viscose fibers which does not affect the feel and texture of the fabric.

Still another object of this invention is to provide a process of incorporating thermoregulatory constituents to viscose fibers such that inherent properties of the viscose rayon fibers such as fiber strength, linear density, tenacity, heat resistance, dyeability and drying properties are not altered.

It is another object of this invention to provide antimicrobial viscose fibers, wherein at least one antimicrobial constituent is incorporated in the body of the fiber.

Another object of this invention is to provide a process of incorporating antimicrobial constituents into viscose fibers which ensures uniform distribution of the antimicrobial constituent throughout the fiber length.

Yet another object of this invention is to provide antimicrobial viscose fibers wherein the antimicrobial constituents are retained in the viscose product over a prolonged period of time.

Yet another object of this invention is to provide a process of incorporating antimicrobial constituents to viscose fibers which does not alter the feel and texture of the fabric.

Still another object of this invention is to provide a process of incorporating antimicrobial constituents to viscose fibers such that inherent properties of the viscose rayon fibers such as fiber strength, linear density, tenacity, heat resistance, dyeability and drying properties are not altered.

It is yet another object of this invention to provide perfumed viscose fibers, wherein at least one perfume constituent is incorporated in the body of the fiber.

Another object of this invention is to provide a process of incorporating perfume constituents into viscose fibers which ensures uniform distribution of the perfume constituent throughout the fiber length.

Yet another object of this invention is to provide perfumed viscose fibers wherein the perfume constituents are retained in the viscose product over a prolonged period of time.

Yet another object of this invention is to provide a process of incorporating perfume constituents to viscose fibers which does not alter the feel and texture of the fabric.

Still another object of this invention is to provide a process of incorporating perfume constituents to viscose fibers such that inherent properties of the viscose rayon fibers such as fiber strength, linear density, tenacity, heat resistance, dyeability and drying properties are not altered.

### Definitions:

As used in the present specification, the following words and phrases are generally intended to have the meanings as set forth below, except to the extent that the context in which they are used indicates otherwise.

"Phase-change agent" means a substance having the ability to releases or absorbs heat whenever it undergoes change in its physical state.

Enthalpy means heat content or total heat, including both sensible and latent heat.

"Latent heat" means the heat energy needed to change the state of a substance (ie: from a solid to a liquid) but not it's temperature.

"Flash point" means the temperature at which a substance gives off a sufficient amount of vapors to form an ignitable mixture with air.

"Non-aqueous phase" means a melted mixture in liquid state which is water insoluble.

"Aqueous phase" means substance dissolved in water.

"Viscose Polymer dope" means an intermediate material in the manufacture of viscose rayon products that is used for preparation of fibers.

"Preform mass" means an intermediate material suitable for making fibers.

"Perfume constituent for example citrus musk" means a group of compounds which when mixed together provides the scent referred to commercially as citrus musk.

### Summary of the Invention:

In accordance with the present invention there is provided a formulation meant for manufacture of viscose rayon products comprising:
- at least one water insoluble constituent, in the form of micro-reservoirs, said constituent being selected from the group consisting of thermoregulatory constituents in an amount of 0.01 to 7%, antimicrobial constituents in an amount of 0.001 to 3.5% and perfume constituents in an amount of 0.001 to 3.5%, said amounts being expressed with respect to the total mass of the formulation;
- at least one water soluble nonionic surfactant having HLB value in the range of 9 to 40,said surfactant being in the range of 0.001 to 3 % of the mass of the formulation,
- viscose polymer (Cellulose Xanthate) in the range of 1 to 15% of the mass of the formulation,
- an alkali in the range of 2 to 7% of the mass of the formulation,
- water in the range of 50 % to 90 % of the mass of the formulation and
- in the case when the water insoluble constituent is an antimicrobial constituent or a perfume constituent, at least one non-aqueous solvent in the range of 0.01 to 7% of the mass of the formulation.

Typically, the water insoluble constituent is a thermoregulatory constituent having a melting point in the range where the thermoregulatory effect is desired, in the range of 0.01 to 7% of the mass of the formulation.

Typically, the thermoregulatory constituent is at least one selected from the group consisting of nonadecane, eicosane, heptadecane, octadecane, pentadecane, hexadecane, decyl alcohol, lauryl alcohol and myristyl alcohol.

Typically, the surfactant is at least one non-ionic surfactant selected from the group of alkyl phenoxy ethoxylated non-ionic surfactants which include Polyoxyethylene(8) isooctylphenyl ether, Nonylphenol polyethylene glycol ether, Polyoxyethylene(9) nonylphenyl ether, Polyoxyethylene(10) isooctylphenyl ether, Polyoxyethylene(12) nonylphenyl ether, Polyoxyethylene(12) isooctylphenyl ether, Polyoxyethylene(40) nonylphenyl ether, Polyoxyethylene(40) isooctylphenyl ether, Polyoxyethylene(100) nonylphenyl ether, Polyoxyethylene(150) dinonylphenyl ether, Surfonic N-95(Poly (oxy-1, 2-ethanediyl), alpha-(nonyl phenyl)-omega-hydroxyl-glycol ether) ( nonylphenol 9.5-mole ethoxylate), Surfonic N-95(Poly (oxy-1, 2-ethanediyl), alpha- (nonyl phenyl)-omega-hydroxyl-glycol ether) ( nonylphenol 9.5-mole ethoxylate), Surfonic N-120(nonylphenol 12-mole ethoxylate), Surfonic N-150 (nonylphenol 15-mole ethoxylate), Surfonic N-200 (nonylphenol 20-mole ethoxylate), Surfonic N-300( nonylphenol 30-mole ethoxylate), Surfonic N-400 nonylphenol 40-mole ethoxylate, Surfonic LF-7 (Alkyl polyoxyalkylene ether), Surfonic LF-17 (ethoxylated and propoxylated linear primary 12-14 carbon number alcohol), Igepal CO-630 (nonylphenoxy poly(ethyleneoxy)ethanol,branched), Surfonic DNP-40 (dinonylphenol ethoxylate glycol ether); ethoxylated alkyl alcohol surfactants, Polyethylene-block-Poly propylene glycol-block-polyethylene glycol and Ethylenediamine tetrakis(propylene oxide-block-ethylene oxide) tetrol.

Typically, the preferred HLB value of the surfactant is between 16 and 40 or wherein the average mean size of the micro-reservoir is in the range of 5 nm to 2000 nm.

The present invention also extends to a thermoregulatory viscose rayon product being at least one product selected from the group consisting of fiber, yarn and fabric manufactured from a formulation in accordance with the invention.

In accordance with an embodiment of the present invention, the formulation is an antimicrobial viscose formulation having:
- at least one non-aqueous solvent in the range of 0.01 to 7% of the mass of the formulation,
- at least one water insoluble antimicrobial constituent soluble in said solvent, said constituent being in the range of 0.001 to 3.5% of the mass of the formulation,
- at least one water soluble nonionic surfactant having HLB value in the range of 9 to 40,said surfactant being in the range of 0.001 to 3% of the mass of the formulation,
- viscose polymer (Cellulose Xanthate) in the range of 1% to 15% of the mass of the formulation,
- an alkali in the range of 2 to 7% % of the mass of the formulation, and
- water in the range of 50% to 90 % of the mass of the formulation.

Typically, the antimicrobial constituent is at least one selected from a group consisting of 2-Methyl-4-isothiazolin-3-one, water, Phenoxyethanol Benzoic acid, 4-Hydroxy-methyl ester, Hydroxy-benzoic acid propyl ester), o-(2-naphthyl) methyl (3-methylphenyl) thiocarbamate, 5-chloro-2-(2,4-dichlorophenoxy)pheno1,4,5-dichloro-n-octyl-4-isothiazoline-3-one[DCOIT] 2-n-octyl-4-isothiazolin-3-one, 1-phenoxy propan-2-ol, pentachlorophenol, 5-chloro-2-dichlorophenoxy phenol, clotrimazole, p-chloro-m-xylenol and chloroquinaldol.

Typically, the solvent is at least one solvent selected from a group of solvents consisting of C₁₀-C₄₄ alkanes (paraffinic hydrocarbons), polyethylene, polypropylene, polypropylene glycol, polytetramethylene glycol, polypropylene malonate, polyneopentyl glycol sebacate, polypentane glutarate, polyvinyl myristate, polyvinyl stearate, polyvinyl laurate, polyhexadecyl methacrylate, polyoctadecyl methacrylate, polyethylene oxides, polyethylene glycols, Arachidyl alcohol, behenyl alcohol, Selachyl alcohol, chimimyl alcohol, polyesters, di-iso decyl phthalate, benzyl alcohol, C4 -C30 aliphatic alcohols , C4 -C30 saturated hydrocarbons, C₄ -C₃₀ monounsaturated hydrocarbons, natural oils and mineral oil paraffins.

The present invention also extends to an antimicrobial viscose rayon product selected from the group consisting of fiber, yarn and fabric manufactured from a formulation in accordance with the invention.

In accordance with one of the embodiment the formulation is a perfumed viscose formulation comprising:
- at least one non-aqueous solvent in the range of 0.01 to 7% of the mass of the formulation,
- at least one water insoluble perfume constituent soluble in said solvent, in the range of 0.001 to 3.5 % of the mass of the formulation,
- at least one water soluble nonionic surfactant having HLB value in the range of 9 to 40, in the range of 0.001 to 3% of the mass of the formulation,
- viscose polymer (cellulose xanthate) in the range of 1 to 15%,
- an alkali in the range of 2 to 7% of the mass of the formulation, and
- water in the range of 50% to 90% of the mass of the formulation.

Typically, the perfume constituent is at least one selected from a group consisting of citrus musk, floral woody, citrus musk woody, fresh bouquet, musk, floral musk, lavender oil, jasmine oil, rose oil, cedarwood oil, sandalwood oil, orange oil and lemon oil.

Typically, the solvent is at least one solvent selected from a group of solvents consisting of C₁₀-C₄₄ alkanes (paraffinic hydrocarbons), polyethylene, polypropylene, polypropylene glycol, polytetramethylene glycol, polypropylene malonate, polyneopentyl glycol sebacate, polypentane glutarate, polyvinyl myristate, polyvinyl stearate, polyvinyl laurate, polyhexadecyl methacrylate, polyoctadecyl methacrylate, polyethylene oxides, polyethylene glycols, Arachidyl alcohol, behenyl alcohol, Selachyl alcohol, chimimyl alcohol, polyesters, di-iso decyl phthalate, benzyl alcohol, C4 -C30 aliphatic alcohols ,C4 -C30 saturated hydrocarbons, C₄ -C₃₀ monounsaturated hydrocarbons, natural oils and mineral oil paraffins.

The present invention also extends to a perfumed viscose rayon product selected from the group consisting of fiber, yarn and fabric manufactured from a formulation in accordance with the invention.

In accordance with the present invention there is also provided a process for manufacture of viscose rayon products comprising the following steps:
- selecting a non-water-soluble constituent from the group consisting of thermoregulatory constituents, antimicrobial constituents and perfume constituents, mixing with at least one non-aqueous solvent in the case of antimicrobial constituents and perfume constituents and heating said constituent between 25⁰C and 95⁰C to form a non-aqueous phase;
- dissolving and stirring at least one water soluble nonionic surfactant having HLB value in the range of 9 to 40, optionally with a cosurfactant, in water to obtain an aqueous phase;
- admixing and homogenizing the non-aqueous phase with the aqueous phase to obtain a micro-emulsion; and
- dispersing the micro-emulsion throughout the mass of the viscose polymer dope to obtain a preform mass wherein the water insoluble constituent is in the form of evenly dispersed micro-reservoirs.

### Brief Description of the accompanying Drawings:

The invention will be described in detail with reference to the accompanying drawings.

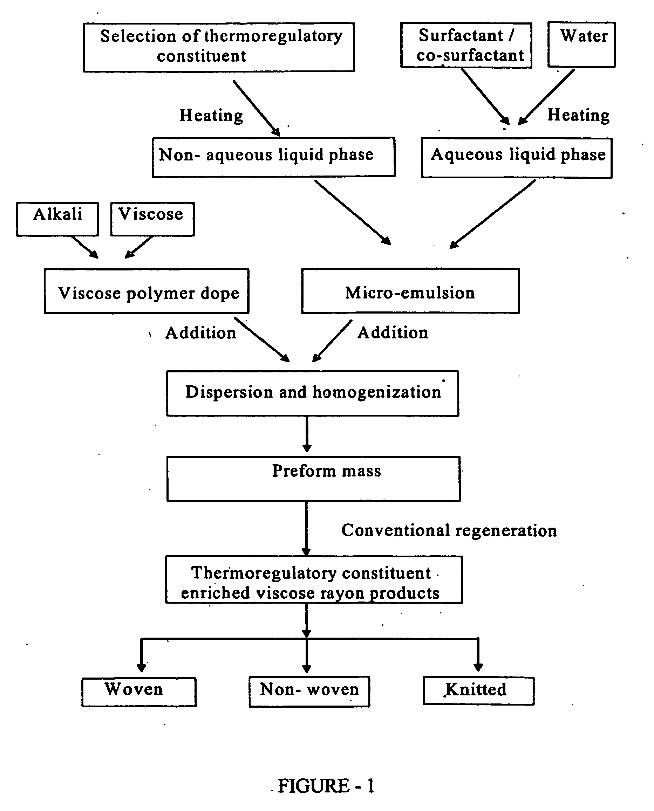

In the accompanying drawing, Figure 1 illustrates the block diagram showing the method steps involved in the process of making a thermoregulatory viscose fiber in accordance with this invention.

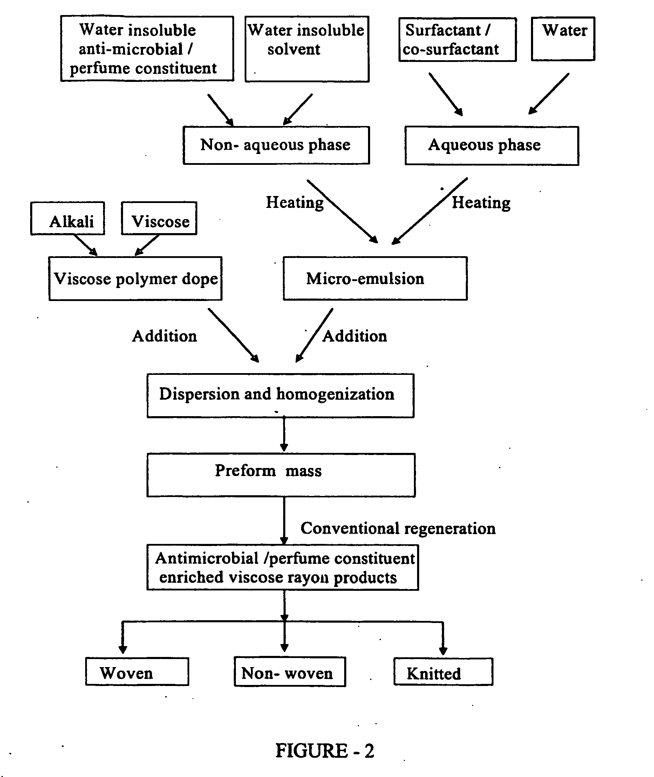

In the accompanying drawing, Figure 2 illustrates the block diagram showing the method steps involved in the process of making an antimicrobial or perfumed viscose fiber in accordance with this invention.

Figure 3 illustrates the cross-sectional view of thermoregulatory viscose rayon fibers prepared in accordance with this invention which shows uniform distribution of micro-reservoirs of thermoregulatory constituents entrapped across the length of the fibers.

Figure 4 illustrates the cross-sectional view of antimicrobial viscose rayon fibers prepared in accordance with this invention which shows uniform distribution of micro-reservoirs of antimicrobial constituents entrapped across the length of the fibers.

Figure 5 illustrates the cross-sectional view of perfumed viscose rayon fibers prepared in accordance with this invention which shows uniform distribution of micro-reservoirs of perfumed constituents entrapped across the length of the fibers.

### Detailed Description:

Viscose rayon fibers were the first viable manufactured fibers. The reason behind the most widespread use of these fibers lies in their versatility. Furthermore, these fibers also have peculiar ability to blend easily with many fibers which makes them the fibers of choice.

Though Rayon fibers and fabrics made from them have many desirable properties, oftentimes, consumers expect performance characteristics beyond those for which rayon fibers were designed. In order to meet with these increasing expectations, various thermoregulatory constituents are incorporated in the viscose rayon fibers. There has been a considerable interest in developing such materials.

The additional desirable properties of viscose rayon fibers which has enormous demand are "thermoregulatory activity", "antimicrobial activity", and "perfumed fibers".

Thermoregulatory constituents improve the thermal insulation of the viscose rayon fibers during changes in environmental temperature conditions. Thermoregulatory constituents are phase change materials which improve the thermal performance of clothing by absorbing or releasing heat when subjected to heating or cooling during a phase change.

Thermoregulatory viscose product abates the transient effect on a human body's heat loss when the person wearing such fabric is exposed to temperature swings resulting from change in environmental conditions.

Thermoregulatory constituents that are used include nonadecane, eicosane, heptadecane, octadecane, hexadecane, pentadecane and myristyl alcohol.

Thermoregulatory ability of the thermoregulatory constituents is governed by several factors which include melting point, quantity of the thermoregulatory constituent in the fabric, different combinations and proportions in which the thermoregulatory constituents are blended together, type of the polymer used in the fabric, thickness of the fabric, distribution of the thermoregulatory constituent in the fabric, and the process used for incorporating the thermoregulatory constituent in the fabric.

Specific thermoformable properties of the fabric with respect to the desired temperature zones are adjusted by careful blend of the thermoregulatory constituents in specific proportions. The thermoregulatory constituent is selected such that it has a melting point that falls within the range of temperature in which thermal regulation is desired to be achieved. Thus, if thermal regulation is desired in the range of 21 -30°C, then the melting point of the thermoregulatory constituent must fall within this range. Again if the fabric is to be used in climatic regions, where regulation is desired below 20 °C, then the thermoregulatory constituent having melting point below 20 °C is used. The thermoregulatory viscose fabric acts as a transient thermal barrier by protecting the wearer of this fabric from the effects of cold or hot environments. When such thermoregulatory viscose fabric is subjected to heating from the sun or a hot environment, it will absorb transient heat as it changes phase from solid to liquid, and it will prevent the temperature of the fabric from rising by keeping it constant at the melting point temperature of the thermoregulatory constituent. Once thermoregulatory constituent has completely melted, its transient effect will cease and the temperature of the fabric will rise. In a similar manner, when a thermoregulatory fabric is subjected to a cold environment where the temperature is below its crystallization point, it will interrupt the cooling effect of the fabric structure by changing phase from liquid to solid, and the temperature of fabric will be kept constant at the crystallization point. Once all the thermoregulatory constituents have crystallized, the fabric temperature will drop, and the thermoregulatory constituents will have no effect on the fabric's thermal performance.

Thus, the thermal performance of a thermoregulatory constituent is a function of phase change temperature, the amount of thermoregulatory constituent and the amount of energy it absorbs or releases during a phase change.

In accordance with one embodiment of the present invention, there is provided a thermoregulatory formulation meant for manufacture of viscose rayon products comprising:
■ at least one non-water-soluble thermoregulatory constituent having a melting point lying in a predetermined range of temperature said constituent being in the range of 0.01 to 7% of the mass of the formulation,
■ at least one water soluble nonionic surfactant having HLB value in the range of 9 to 40,said surfactant being in the range of 0.001 to 3 % of the mass of the formulation,
■ viscose polymer (Cellulose Xanthate) in the range of 1 to 15% of the mass of the formulation,
■ an alkali in the range of 2 to 7% of the mass of the formulation, and
■ water in the range of 50 % to 90 % of the mass of the formulation.

In accordance with the invention, thermoregulatory constituent is typically at least one selected from the group consisting of nona-decane, eicosane, heptadecane, octadecane, decyl alcohol, lauryl alcohol and myristyl alcohol.

The thermoregulatory constituent impart thermoregulation property to the fibers and ultimately to the fabric or garments made from these fibers.

The non-ionic surfactant is selected such that the lipophilic portion of the non-ionic surfactant is compatible with the thermoregulatory constituent and the surfactant forms oil in water microemulsion. Surfactants with HLB values within the range of 9 to 40 are used. Preferably, non-ionic surfactants with HLB values more than 13 are used.

In accordance with one preferred embodiment of the invention, the HLB value of the surfactant is 16 to 40. Still preferably, the HLB value of the surfactant is 17.5.

The alkali can be any suitable alkali. Preferably, sodium hydroxide is used in the formulation. The alkalinity of the formulation is in the range of about 5% to 6%, preferably 5.6%.

In accordance with one aspect of the invention, the thermoregulatory constituent, the solvent and the surfactant are processed to form micro-reservoirs which are embedded into the body of the formulation. The thermoregulatory viscose rayon contains uniformly dispersed micro-reservoirs throughout the body of the fibers. The micro-reservoirs are discrete, nano-sized structures without any definite geometrical shape.

Typically, the average mean size of the micro-reservoir is in the range of 5 nm to 2000 nm.

The present invention also extends to a thermoregulatory viscose rayon product being at least one product selected from the group consisting of fiber, yarn and fabric manufactured from a formulation in accordance with the invention.

In accordance with the present invention there is provided a process for manufacture of a thermoregulatory viscose formulation meant for manufacture of viscose rayon products comprising the following steps:
- selecting a non-water-soluble constituent from the group consisting of thermoregulatory constituents having a melting point lying in a predetermined range and heating said constituent between 25°C and 95°C to form a non-aqueous phase;
- dissolving and stirring at least one water soluble nonionic surfactant having HLB value in the range of 9 to 40, optionally with a cosurfactant, in water to obtain an aqueous phase;
- admixing and homogenizing the non-aqueous phase with the aqueous phase to obtain a micro-emulsion; and
- dispersing the micro-emulsion throughout the mass of the viscose polymer dope to obtain a preform mass wherein the water insoluble constituent is in the form of evenly dispersed micro-reservoirs.

Typically, the pH of the aqueous phase is in the range of 7 to 13.

Typically, the amount of non-aqueous phase in the micro-emulsion is in the range of 0.1 to 40% of the mass of the micro-emulsion.

Typically, the amount of surfactant in the micro-emulsion is in the range of 0.1 to 20% of the mass of the micro-emulsion.

Before arriving at the optimum concentration of the surfactant to be used, cloud point of the aqueous phase is determined. Furthermore, alkalinity of the aqueous phase is made to match with that of the viscous polymer dope thereby avoiding any drastic change in the alkalinity during the emulsification and homogenization step.

Typically, the melted non-aqueous phase containing thermoregulatory constituent in a non-aqueous solvent along with aqueous phase containing surfactants is emulsified using high speed mixers such as Ultraturrex or a mechanical emulsifier; a colloid mill; a high pressure homogenizer and an ultrasonic emulsifier to form a microemulsion. The micro-emulsion may contain further additional thermoregulatory constituents, if desired.

It is important that the non-aqueous phase is maintained in liquid state throughout the mixing process. The aqueous phase therefore is typically heated upto a particular temperature to ensure that the temperature of the resulting emulsion is above the melting point of the thermoregulatory constituent. If this does not happen, the resulting emulsion will break down.

The active ingredients are released from the micro-reservoir into the viscose matrix. The structure of micro-reservoir, viscose and surrounding conditions determine the release rate of the thermoregulatory constituent. The molecules of the volatile thermoregulatory constituents migrate from micro-reservoirs to the surrounding primarily by diffusion. The thermoregulatory constituent is released from the matrix in a controlled release manner.

According to another embodiment of the present invention, there is provided an antimicrobial viscose formulation meant for manufacture of viscose rayon products comprising:
- at least one non-aqueous solvent in the range of 0.01 to 7% of the mass of the formulation,
- at least one water insoluble antimicrobial constituent soluble in said solvent, said constituent being in the range of 0.001 to 3.5% of the mass of the formulation,
- at least one water soluble surfactant having HLB value in the range of 9 to 40, in the range of 0.001 to 3% of the mass of the formulation,
- viscose polymer (Cellulose Xanthate) in the range of 1% to 15% of the mass of the formulation,
- an alkali in the range of 2 to 7% % of the mass of the formulation, and
- water in the range of 50% to 90 % of the mass of the formulation.

In accordance with the invention, anti-microbial constituent is typically at least one selected from a group consisting of 2-Methyl-4-isothiazolin-3-one, water, Phenoxyethanol Benzoic acid, 4-Hydroxy-methyl ester, Hydroxy-benzoic acid and propyl ester), o- (2-naphthyl) methyl (3-methylphenyl) thiocarbamate, 5-chloro-2-(2,4-dichlorophenoxy)phenol, 4,5-dichloro-n-octyl-4-isothiazoline-3-one[DCOIT] 2-n-octyl-4-isothiazolin-3-one, 1-phenoxy propan-2-ol, pentachlorophenol, 5-chloro-2-dichlorophenoxy phenol, clotrimazole, p-chloro-m-xylenol and chloroquinaldol.

The antimicrobial constituent impart antimicrobial property to the fibers and ultimately to the fabric or garments made from these fibers.

Preferably, paraffin wax either alone or in combination with stearyl alcohol is used as the non-aqueous solvent.

The non-ionic or anionic surfactant is selected such that the lipophilic portion of the non-ionic or anionic surfactant is compatible with the antimicrobial constituent and the surfactant forms oil in water microemulsion. Surfactants with HLB values within the range of 9 to 40 are used.

The alkali can be any suitable alkali for the viscose process. Preferably, sodium hydroxide is used in the formulation. The alkalinity of the formulation is in the range of about 5% to 6%, preferably 5.6%.

In accordance with one aspect of the invention, the antimicrobial constituent, the solvent and the surfactant are processed to form micro-reservoirs which are embedded into the body of the formulation. The antimicrobial viscose rayon contains uniformly dispersed micro-reservoirs throughout the body of the fibers. The micro-reservoirs are discrete, nano-sized structures without any definite geometrical shape.

The invention also extends to an antimicrobial viscose rayon product selected from the group consisting of fiber, yarn and fabric manufactured from a formulation in accordance with the present invention.

In accordance with the present invention there is also provided a process for manufacture of an antimicrobial viscose formulation meant for manufacture of viscose rayon products comprising the following steps:
- selecting a non-water-soluble antimicrobial constituent, mixing with at least one non-aqueous solvent and heating the resulting mixture between 25°C and 95°C to form a non-aqueous phase ;
- dissolving and stirring at least one water soluble nonionic surfactant, having HLB value in the range of 9 to 40, optionally with a cosurfactant, in water to obtain an aqueous phase;
- admixing and homogenizing the non-aqueous phase with the aqueous phase to obtain a micro-emulsion; and
- dispersing the micro-emulsion throughout the mass of the viscose polymer dope to obtain a preform mass wherein the antimicrobial constituent is in the form of evenly dispersed micro-reservoirs.

Typically, the proportion of antimicrobial constituent in the viscose rayon product is in the range of 0.001 to 5% with respect to the mass of the viscose rayon product.

Before arriving at the optimum concentration of the surfactant to be used, cloud point of the aqueous phase is determined.

Typically, the melted non-aqueous phase containing antimicrobial constituent in a non-aqueous solvent along with aqueous phase containing surfactants is emulsified using high speed mixers such as Ultraturrex or a mechanical emulsifier; a colloid mill; a high pressure homogenizer and an ultrasonic emulsifier to form a microemulsion. The micro-emulsion may contain further additional antimicrobial constituents, if desired.

The active ingredients are released from the micro-reservoir into the viscose matrix. The structure of micro-reservoir, viscose and surrounding conditions determine the release rate of the antimicrobial constituent. The molecules of the volatile antimicrobial constituents migrate from micro-reservoirs to the surrounding primarily by diffusion. The antimicrobial constituent is released from the matrix in a controlled release manner.

According to yet another embodiment of the present invention, there is provided a perfumed viscose formulation meant for manufacture of viscose rayon products comprising:
- at least one non-aqueous solvent in the range of 0.01 to 7% of the mass of the formulation,
- at least one water insoluble perfume constituent soluble in said solvent, in the range of 0.001 to 3.5 % of the mass of the formulation,
- at least one water soluble nonionic surfactant having HLB value in the range of 9 to 40, in the range of 0.001 to 3% of the mass of the formulation,
- viscose polymer (cellulose xanthate) in the range of 1 to 15%,
- an alkali in the range of 2 to 7% of the mass of the formulation, and
- water in the range of 50% to 90% of the mass of the formulation.

In accordance with the invention, various perfume constituents from different sources are used. The typical perfume comprises a plurality of individual perfume active compounds, although it can consist essentially of a single perfume ingredient. It is well within the scope of the perfumer of ordinary skill in the art changing ingredients in the perfume component and/or modifying the relative levels of perfume ingredients.

In case of synthetic perfume constituents, a perfume constituent is a composition of one or more synthetic compounds. Various types of chemical compounds are commonly known for perfumery uses including: phenolic compounds; essential oils; aldehydes; ketones; polycyclic compounds; esters; and alcohols. Many perfume ingredients contain a combination of functional groups and can be categorized under two or more of the above classes.

Various plant derived perfume constituents generally include variety of phyto-chemicals along with the principle active phyto-constituent.

From the standpoint of the perfumer, it is convenient to consider the perfume ingredients in terms of the type of aroma it imparts rather than the particular chemical class or classes it may fall within. The perfume components herein can be formulated to provide a variety of odor categories: a non-exclusive list includes woody, sweet, citrus, floral, fruity, animal, spice, green, musk, balsamic, chemical, and mint. A variety of exemplary perfume ingredients are described below for several of the commonly used odor categories, long with their representative (but not necessarily exclusive) chemical categories.

Woody perfume ingredients include cedarwood oil (essential oil), guaicwood oil (essential oil), gamma ionone (ketone), sandalwood oil (essential oil), and methyl cedrylone (ketone). Sweet perfume ingredients include coumarin (ketone), vanillin (4 hydroxy-3methoxy benzaldehyde) (aldehyde), ethyl maltol (Alcohol), phenyl acetaldehyde (aldehyde), heliotropin (aldehyde), acetophenone (ketone), and dihydrocoumarin (ketone). Citrus perfume ingredients include orange oil (essential oil), lemon oil (essential oil), citral (aldehyde), beta methyl naphthyl ketone (ketone), terpinyl acetate (ester), nonyl aldehyde (aldehyde), terpineol (alcohol), and dihydromyrcenol (alcohol). Floral perfume ingredients include a variety of floral subcategories, such as rose, lavender, jasmin, and muguet. Rose perfume ingredients include geranyl acetate (ester), geraniol (alcohol), citronelyl acetate (ester), phenyl ethyl alcohol (alcohol), alpha damascone (ketone), beta damascone (ketone), geranium oil (essential oil), and natural rose oil (essential oil). Lavender perfume ingredients include dihydro terpinyl acetate (ester), ethyl hexyl ketone (ketone), lavandin (essential oil), lavender (essential oil), tetra hydro linalool (alcohol), linalool (alcohol), and linalyl acetate (ester). Jasmin perfume ingredients include benzyl acetate (ester), butyl cinnamic aldehyde (aldehyde), methyl benzoate (ester), natural jasmin oil (essential oil), methyl dihydro jasmonate (ester). Muguet perfume ingredients include cycalmen aldehyde (aldehyde), benzyl salycilate (ester), hydroxycitronellol (alcohol), citronellyl oxyacetaldehyde (aldehyde), and hydroxy aldehyde (aldehyde). Fruity perfume ingredients include ethyl-2-methyl butyrate (ester), allyl cyclohexane propionate (ester), amyl acetate (ester), ethyl acetate (ester), gamma decalactone (ketone), octaiactone (ketone), undecalactone (aldehyde), ethyl aceto acetate (ester), benzaldehyde (aldehyde). Animal perfume ingredients include methyl phenyl acetate (ester), indol (2,3, benzpyrrole) (phenolic), creosol (phenolic), iso butyl quinolin (phenolic), and androstenol (phenolic). Spice perfume ingredients include anisic aldehyde (aldehyde), anise (essential oil), clove oil (essential oil), eugenol (phenolic), iso eugenol (phenolic), thymol (phenolic), anethol (phenolic), cinnamic alcohol (alcohol), and cinnamic aldehyde (aldehyde). Green perfume ingredients include beta gamma hexenol (alcohol), brom styrol (alcohol), dimethyl benzyl carbinol (alcohol), methyl heptine cart onate (ester), cis-3-hexenyl acetate (ester), and galbanum oil (essential oil). Musk perfume ingredients often also function as fixatives. Examples of musk include glaxolide (phenol), cyclopentadecanolide (phenol), musk ketone (ketone), ambrettolide (phenol), tonalid (phenol), and ethylene brassylate (ester). Balsamic perfume ingredients include fir balsam (essential oil, peru balsam (essential oil), and benzoin resinoid (essential oil). Mint perfume ingredients include laevo carvone (ketone), menthol (alcohol), methyl salicylate (ester), peppermint oil (essential oil), spearmint oil (essential oil), eucalyptus (essential oil), anisyl acetate (ester), methyl chavicol (alcohol). Nonionic Surfactant Chemical perfume ingredients include benzyl alcohol (alcohol), diproplene glycol (alcohol), ethanol (alcohol), and benzyl benzoate (ester), Andrane, Cedramber, Decyl methyl ether, Galaxolid, Grisalv, Indolarome-soli, Orange flower ether, Ozofleu, Phenafleu, Tobacaro, Paracresyl methyl Ether, Karana, Cyclogalbanat, Piconi, Iso-cyclemone, Iso E supe, Celestolide-soli, Fleuramon" ihydroisojasmon, Isojasmon, Tonali, Methyl Ionone, Dulcinyl-soli, Acetanisol, Vetikon, Undecylenic Aldehyd, lilia, Vanilli, Cinnamic Alcoho, Iso-Eugeno, Tetra-Hydro Geranio, Calone 10 % DE, Dihydro-isojasmon, Galaxolide, Karanal 10% DE, Yara Yara (Nerolin), Decyl methyl ether, Ethyl Methyl Phenyl Glycidate, Para-Cresyl Phenyl acetate, Undecalactone, Clonal IFF

Preferred plant derived perfume compositions are provided herein below: Rose oil: beta-damascenone, beta-damascone, beta-ionone and rose oxide; Lavender oil: linalool and linalyl acetate; Orange oil: d-limonene; Jasmine oil: benzyl acetate, linalool, benzyl alcohol, indole, benzyl benzoate, cisjasmone, geraniol and methyl anthranilate; Sandalwood oil: santalols, santene, nor-tricycloekasantalene and a- and ,β-santalenes, santenol and teresantalol; Cedarwood oil: p-methyl-δ-3- tetrahydroacetophenone, p-methyl acetophenone, *cis-* and *trans-* atlantones, α- and β-himalchenes, ardihydroturmerone and himachalol.

The perfume constituent impart peculiar pleasant aroma or fragrance to the fibers and ultimately to the fabric or garments made from these fibers.

In accordance with this invention, only non-aqueous solvent is used which is typically selected from a group of solvents consisting of C₁₀-C₄₄ alkanes (paraffinic hydrocarbons), polyethylene, polypropylene, polypropylene glycol, polytetramethylene glycol, polypropylene malonate, polyneopentyl glycol sebacate, polypentane glutarate, polyvinyl myristate, polyvinyl stearate, polyvinyl laurate, polyhexadecyl methacrylate, polyoctadecyl methacrylate, polyethylene oxides, polyethylene glycols, Arachidyl alcohol, behenyl alcohol, Selachyl alcohol, chimimyl alcohol, polyesters, di-iso decyl phthalate, diethyl phthalate and other alkyl phthalates, benzyl alcohol, C4 - C30 aliphatic alcohols ,C4 -C30 saturated hydrocarbons, C₄ -C₃₀ monounsaturated hydrocarbons, natural oils and mineral oil paraffins.

Preferably, paraffin wax either alone or in combination with stearyl alcohol is used as the non-aqueous solvent.

In accordance with this invention only water soluble non cationic surfactant/co-surfactant is used. Typically, the non-ionic surfactant is selected from a group consisting of alkyl phenoxy ethoxylated non-ionic surfactants and ethoxylated alkyl alcohol surfactants, Polyethylene-block-Poly propylene glycol-block-polyethylene glycol and Ethylenediamine tetrakis(propylene oxide-block-ethylene oxide) tetrol. Typically, the alkyl phenoxy ethoxylated non-ionic surfactant is at least one selected from a group consisting of Polyoxyethylene(8) isooctylphenyl ether, Nonylphenol polyethylene glycol ether, Polyoxyethylene(9) nonylphenyl ether, Polyoxyethylene(10) isooctylphenyl ether, Polyoxyethylene(12) nonylphenyl ether, Polyoxyethylene(12) isooctylphenyl ether, Polyoxyethylene(40) nonylphenyl ether, Polyoxyethylene(40) isooctylphenyl ether, Polyoxyethylene(100) nonylphenyl ether, Polyoxyethylene(150) dinonylphenyl ether, Surfonic N-95(Poly (oxy-1, 2-ethanediyl), alpha- (nonyl phenyl)-omega-hydroxyl-glycol ether) ( nonylphenol 9.5-mole ethoxylate), Surfonic N-95(Poly (oxy-1, 2-ethanediyl), alpha- (nonyl phenyl)-omega-hydroxyl-glycol ether) ( nonylphenol 9.5-mole ethoxylate), Surfonic N-120(nonylphenol 12-mole ethoxylate), Surfonic N-150 (nonylphenol 15-mole ethoxylate), Surfonic N-200 (nonylphenol 20-mole ethoxylate), Surfonic N-300( nonylphenol 30-mole ethoxylate), Surfonic N-400 nonylphenol 40-mole ethoxylate, Surfonic LF-7 (Alkyl polyoxyalkylene ether), Surfonic LF-17 (ethoxylated and propoxylated linear primary 12-14 carbon number alcohol), Igepal CO-630 (nonylphenoxy poly(ethyleneoxy)ethanol,branched), Surfonic DNP-40 (dinonylphenol ethoxylate glycol ether).

The non-ionic surfactant is selected such that the lipophilic portion of the non-ionic surfactant is compatible with the perfume constituent and the surfactant forms oil in water micro-emulsion. Surfactants with HLB values within the range of 9 to 40 are used. Preferably, non-ionic surfactants with HLB values more than 13 are used.

In accordance with one preferred embodiment of the invention, the HLB value of the surfactant is between 16 and 40.

Typically, the alkali used in the formulation is sodium hydroxide. Typically, the alkalinity of the formulation is in the range of about 5% to 6%, preferably 5.6%.

In accordance with one aspect of the invention, the perfume constituent, the solvent and the surfactant are processed to form micro-reservoirs which are embedded into the body of the formulation. The perfumed viscose rayon contains uniformly dispersed micro-reservoirs throughout the body of the fibers. The micro-reservoirs are discrete, nano-sized structures without any definite geometrical shape.

Typically, the average mean size of the micro-reservoir is in the range of 5 nm to 2000 nm.

The invention also extends to a perfume viscose rayon product selected from the group consisting of fiber, yarn and fabric manufactured from a formulation in accordance with the present invention.

In accordance with the present invention there is also provided a process for manufacture of a perfume viscose formulation meant for manufacture of viscose rayon products comprising the following steps:
- selecting a non-water-soluble perfume constituent, mixing with at least one non-aqueous solvent and heating the resulting mixture between 25°C and 95°C to form a non-aqueous phase ;
- dissolving and stirring at least one water soluble nonionic surfactant, having HLB value in the range of 9 to 40, optionally with a cosurfactant, in water to obtain an aqueous phase;
- admixing and homogenizing the non-aqueous phase with the aqueous phase to obtain a micro-emulsion; and
- dispersing the micro-emulsion throughout the mass of the viscose polymer dope to obtain a preform mass wherein the perfume constituent is in the form of evenly dispersed micro-reservoirs.

Typically, the pH of the aqueous phase is in the range of 7 to 13.

Typically, the amount of non-aqueous phase in the micro-emulsion is in the range of 0.1 to 40% of the mass of the micro-emulsion.

Typically, the amount of surfactant in the micro-emulsion is in the range of 0.1 to 20% of the mass of the micro-emulsion.

Typically, the proportion of perfume constituent in the viscose rayon product is in the range of 0.001 to 20% with respect to the mass of the viscose rayon product.

Before arriving at the optimum concentration of the surfactant to be used, cloud point of the aqueous phase is determined. Furthermore, alkalinity of the aqueous phase matches with that of the viscous polymer dope thereby avoiding any drastic change in the alkalinity during the emulsification and homogenization step.

Typically, the melted non-aqueous phase containing perfume constituent in a non-aqueous solvent along with aqueous phase containing surfactants is emulsified using high speed mixers such as Ultraturrex or a mechanical emulsifier; a colloid mill; a high pressure homogenizer and an ultrasonic emulsifier to form a micro-emulsion. The micro-emulsion may contain further additional perfume constituents, if desired.

The active ingredients are released from the micro-reservoir into the viscose matrix. The structure of micro-reservoir, viscose and surrounding conditions determine the release rate of the perfume constituent. The molecules of the volatile perfume constituents migrate from micro-reservoirs to the surrounding primarily by diffusion. The perfume constituent is released from the matrix in a controlled release manner.

The preform mass obtained as above can be further spun into filaments, in a spin bath using conventional regeneration media. A typical conventional regeneration media comprises 100-140 gm/liter sulfuric acid, 100-370 gm/liter salt (sodium sulfate) and retardants (0-60 gm/liter) aluminum sulfate, zinc sulfate.

The filaments so obtained are stretched to straighten out the fibers which are further subjected to 18% sulfuric acid treatment at 95°C for 15 min, washing, desulfurization with 0.6 sodium hydroxide (gm/liter) at 80°C for 15 min, bleaching with sodium hypochloride (1.2 gm/liter) at 45°C for 15 min, followed by water washing at 30°C for 15 minutes, neutralization with acetic acid (1 gm/liter) at 45°C for 15 min and drying at 80 -120°C.

The viscose fibers made as above can be further subjected to post treatment to make fabric which typically involves Converting to Yarn in blend or pure, Converting to Warp Beam, Sizing, Fabric Manufacturing, Desizing, Scouring, Bleaching, Dyeing, Finishing, and Garmenting.

Alternatively, the filaments so obtained are stretched to straighten out the fibers which are further blended using standard equipment. The blended fibers are laid in to a web followed by Consolidation of the web to obtain Non-woven Viscose Fabric.

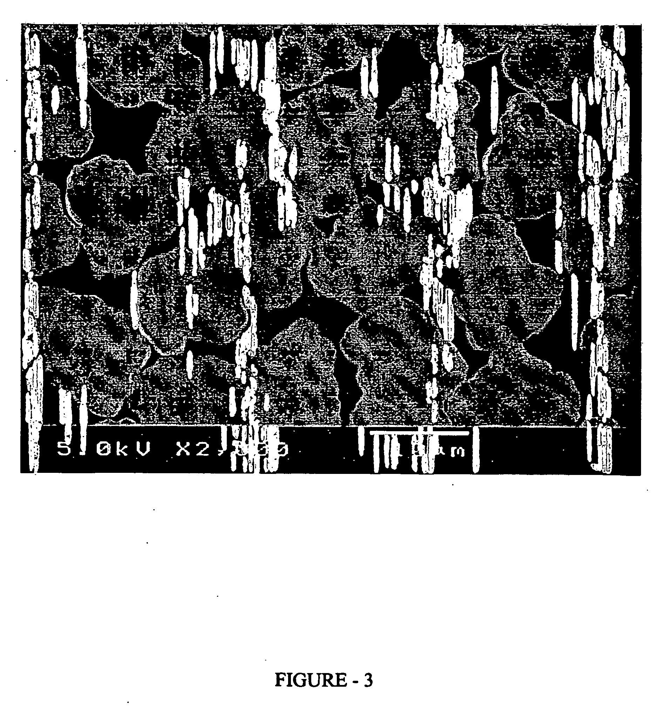

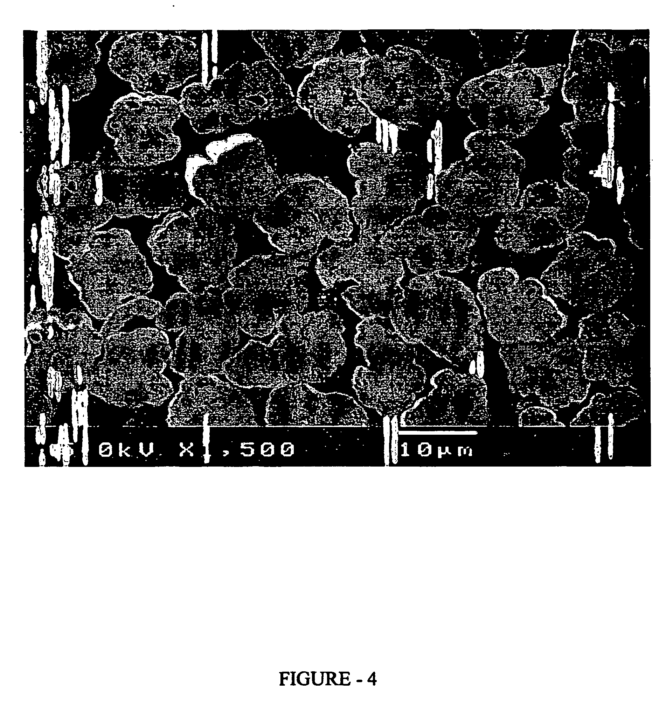

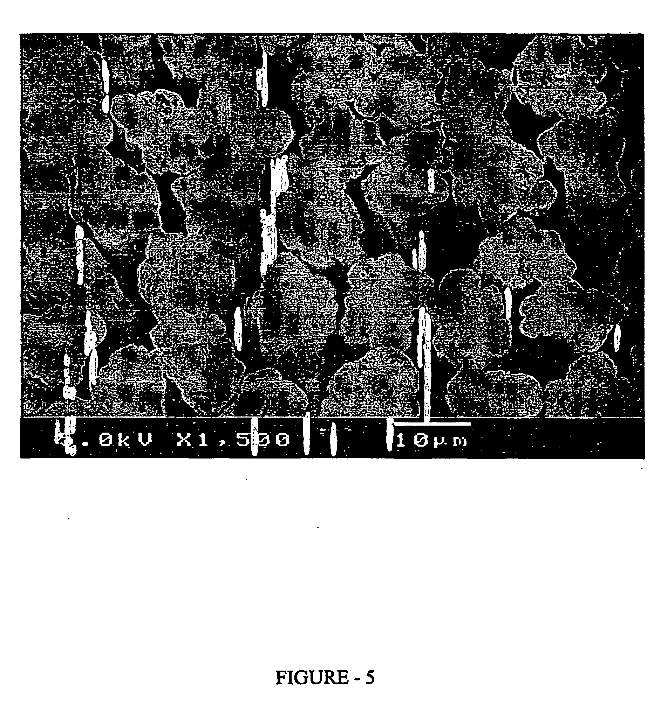

The viscose rayon product made from the formulation in accordance with the present invention contains uniformly dispersed micro-reservoirs throughout the mass which is shown in Figures 3, 4, and 5.

The thermoregulatory viscose rayon fibers contain the entrapped thermoregulatory constituent in releasable form. Microscopic examination of the micro-reservoirs in the viscose rayon fibers is shown in Fig 3.

Thermoregulatory fabric improves the comfort of people irrespective of the fluctuations in the temperature of their surroundings on either side.

Besides this, thermoregulatory fabric also improves the comfort of people as their body goes through a very active state (high metabolic production) to an inactive state on an intermittent basis in a cold environment. This feature is of particular relevance for outdoor sportsmen.

The resultant viscose fabric containing property-modifying constituents such as thermoregulatory constituents, antimicrobial constituents, and perfumed constituents are tested. Linear Density (Denier) of the viscose Fibers is determined by using standard ASTM Test Method (D 1577). The denier of the standard viscose fiber (viscose fiber without any property-modifying constituents) and the property-modified viscose fiber remains the same. Thus addition of the constituents does not change the linear density of the viscose fibers.

Tensile strength and Young's modulus of viscose fiber sample is tested on an Instron tensile testing machine as per the ASTM C1557-03 procedure at ambient temperature.

Visual appearances of the property-modified fiber is evaluated by methods as prescribed in AATCC 124. As far as parameters like % Loss in Dry Tenacity and % loss in dry elongation are concerned, these remain the same in the property-modified viscose rayon fiber and the standard fiber. Incorporation of property-modifying constituent in accordance with this invention does not affect the visual appearance of the fiber.

Feel of the fiber: The property-modified viscose rayon fiber as prepared in accordance with this invention offers the same feel effect as is observed in case of standard viscose fiber).

Another important concern in textile industry is dye-ability of the fabric, which is tested by comparing the dyeability of the property-modified fabric and the standard viscose rayon fabric. Dyeability of the property-modified viscose fibers as prepared in accordance with this invention remains the same as that of the standard viscose fiber.

The invention will now be described with the help of the following nonlimiting examples.

### First Set of Examples for thermoregulatory fibers:

### Example 1

### Example 1 A- Preparation of micro emulsion

Nonadecane (125 gms) and pentadecane (125gm) were heated upto 50°C to form a mixture (250gm).

Surfonic N-400 nonylphenol 40-mole ethoxylate (surfactant) (28 gm) was dissolved and stirred in water 525ml to obtain 553 gm of aqueous phase. The aqueous phase (553 gm) and the mixture (250 gm) were homogenized in a high speed mixer (Ultraturrex) to obtain a micro-emulsion (803 gm).

### Example 1 B- Preparation of fiber

The micro-emulsion as prepared in Example 1A was mixed at 20°C with viscose Polymer Dope containing 6650 gm of viscose polymer, 45790 gm of water and 3110 gm of NaOH having of 5-6% alkalinity to prevent thermal shock and the resulting thermoregulatory enriched viscose polymer dope was homogenized. The homogenized viscose polymer dope was further spun in a spin bath using regeneration media comprising 120 gm/lit sulfuric acid, 200 gm/lit sodium sulfate salt and retardant (20 gm/lit) aluminum sulfate. The filaments so obtained were stretched to straighten out the fibers which were further subjected to18% sulfuric acid treatment at 95°C for 15 min, washing, desulphurization with 0.6 gm/liter sodium hydroxide at 80°C for 15 min, bleaching with sodium hypochloride (1.2 gm /liter) at 45°C for 15 min, followed by water washing at 30°C for 15 minutes, neutralization with acetic acid (1 gm/liter) at 45°C for 15 min and drying at 100°C.

The viscose fiber thus obtained contained micro-reservoirs having the thermoregulatory constituent. Although the micro reservoirs did not have any specific shape or size, they were found to be uniformly distributed throughout the body of the fiber.

### Example 2

### Example 2A- Preparation of micro emulsion

Nonadecane (125 gms) and heptadecane (125gm) were heated upto 50°C to form a mixture (250gm).

Surfonic N-400 nonylphenol 40-mole ethoxylate (surfactant) (28 gm) was dissolved and stirred in water 525ml to obtain 553 gm of aqueous phase. The aqueous phase (553 gm) and the mixture (250 gm) were homogenized in a high speed mixer (Ultraturrex) to obtain a micro-emulsion (803 gm).

### Example 2B- Preparation of fiber

The micro-emulsion as prepared in Example 2A was mixed at 20°C with viscose Polymer Dope containing 6650 gm of viscose polymer, 45790 gm of water and 3110 gm of NaOH having of 5-6% alkalinity to prevent thermal shock and the resulting thermoregulatory enriched viscose polymer dope was homogenized. The homogenized viscose polymer dope was further spun into a fiber using the process as disclosed in example 1.

### Example 3

### Example 3A- Preparation of micro emulsion

octadecane (125 gms) and heptadecane (125gm) were heated upto 50°C to form a mixture (250gm).

Surfonic N-400 nonylphenol 40-mole ethoxylate (surfactant) (28 gm) was dissolved and stirred in water 525ml to obtain 553 gm of aqueous phase. The aqueous phase (553 gm) and the mixture (250 gm) were homogenized in a high speed mixer (Ultraturrex) to obtain a micro-emulsion (803 gm).

### Example 3B- Preparation of fiber

The micro-emulsion as prepared in Example 3A was mixed at 20⁰C with viscose Polymer Dope containing 6650 gm of viscose polymer, 45790 gm of water and 3110 gm of NaOH having of 5-6% alkalinity to prevent thermal shock and the resulting thermoregulatory enriched viscose polymer dope was homogenized. The homogenized viscose polymer dope was further spun into a fiber using the process as disclosed in example 1.

### Example 4

### Example 4A- Preparation of micro emulsion

Eicosane (125 gms) and hexadecane (125gm) were heated upto 50°C to form a mixture (250gm).

Surfonic N-400 nonylphenol 40-mole ethoxylate (surfactant) (28 gm) was dissolved and stirred in water 525ml to obtain 553 gm of aqueous phase. The aqueous phase (553 gm) and the mixture (250 gm) were homogenized in a high speed mixer (Ultraturrex) to obtain a micro-emulsion (803 gm).

### Example 4B- Preparation of fiber

The micro-emulsion as prepared in Example 4A was mixed at 20°C with viscose Polymer Dope containing 6650gm of viscose polymer, 45790 gm of water and 3110 gm of NaOH having of 5-6% alkalinity to prevent thermal shock and the resulting thermoregulatory enriched viscose polymer dope was homogenized. The homogenized viscose polymer dope was further spun into a fiber using the process as disclosed in example 1.

### Example 5

### Example 5A- Preparation of micro emulsion

Nonadecane (150 gms) and heptadecane (100gm) were heated upto 50°C to form a mixture (250gm).

Surfonic N-400 nonylphenol 40-mole ethoxylate (surfactant) (28 gm) was dissolved and stirred in water 525ml to obtain 553 gm of aqueous phase. The aqueous phase (553 gm) and the mixture (250 gm) were homogenized in a high speed mixer (Ultraturrex) to obtain a micro-emulsion (803 gm).

### Example 5B- Preparation of fiber

The micro-emulsion as prepared in Example 5A was mixed at 20⁰C with viscose Polymer Dope containing 1450 gm of viscose polymer, 9960 gm of water and 676 gm of NaOH having of 5-6% alkalinity to prevent thermal shock and the resulting thermoregulatory enriched viscose polymer dope was homogenized. The homogenized viscose polymer dope was further spun into a fiber using the process as disclosed in example 1.

### Example 6

### Example 6A- Preparation of micro emulsion

Pentadecane (140 gms) and Eicosane (110gm) were heated upto 50°C to form a mixture (250gm).

Surfonic N-400 nonylphenol 40-mole ethoxylate (surfactant) (28 gm) was dissolved and stirred in water 525ml to obtain 553 gm of aqueous phase. The aqueous phase (553 gm) and the mixture (250 gm) were homogenized in a high speed mixer (Ultraturrex) to obtain a micro-emulsion (803 gm).

### Example 6B- Preparation of fiber

The micro-emulsion as prepared in Example 6A was mixed at 20°C with viscose Polymer Dope containing 6650 gm of viscose polymer, 45790 gm of water and 3110 gm of NaOH having of 5-6% alkalinity to prevent thermal shock and the resulting thermoregulatory enriched viscose polymer dope was homogenized. The homogenized viscose polymer dope was further spun into a fiber using the process as disclosed in example 1.

### Example 7

### Example 7A- Preparation of micro emulsion

Decyl alcohol (125 gms) and myristyl alcohol (125gm) were heated upto 50 ⁰C to form a mixture (250gm).

Surfonic N-400 nonylphenol 40-mole ethoxylate (surfactant) (28 gm) was dissolved and stirred in water 525ml to obtain 553 gm of aqueous phase. The aqueous phase (553 gm) and the mixture (250 gm) were homogenized in a high speed mixer (Ultraturrex) to obtain a micro-emulsion (803 gm).

### Example 7B- Preparation of fiber

The micro-emulsion as prepared in Example 7A was mixed at 20°C with viscose Polymer Dope containing 6650gm of viscose polymer, 45790gm of water and 3110 gm of NaOH having of 5-6% alkalinity to prevent thermal shock and the resulting thermoregulatory enriched viscose polymer dope was homogenized. The homogenized viscose polymer dope was further spun into a fiber using the process as disclosed in example 1.

### Example 8

### Example 8A- Preparation of micro emulsion

Nonadecane (125 gms) and hexadecane (125gm) were heated upto 50°C to form a mixture (250gm).

Surfonic N-400 nonylphenol 40-mole ethoxylate (surfactant) (28 gm) was dissolved and stirred in water 525ml to obtain 553 gm of aqueous phase. The aqueous phase (553 gm) and the mixture (250 gm) were homogenized in a high speed mixer (Ultraturrex) to obtain a micro-emulsion (803 gm).

### Example 8B- Preparation of fiber

The micro-emulsion as prepared in Example 8A was mixed at 20⁰C with viscose Polymer Dope containing 6650gm of viscose polymer, 45790 gm of water and 3110 gm of NaOH having of 5-6% alkalinity to prevent thermal shock and the resulting thermoregulatory enriched viscose polymer dope was homogenized. The homogenized viscose polymer dope was further spun into a fiber using the process as disclosed in example 1.

### Example 9

### Example 9A- Preparation of micro emulsion

Nonadecane (250 gms) was heated upto 50°C to form a mixture (250gm). Surfonic N-400 nonylphenol 40-mole ethoxylate (surfactant) (28 gm) was dissolved and stirred in water 525ml to obtain 553 gm of aqueous phase. The aqueous phase (553 gm) and the mixture (250 gm) were homogenized in a high speed mixer (Ultraturrex) to obtain a micro-emulsion (803 gm).

### Example 9B- Preparation of fiber

The micro-emulsion as prepared in Example 9A was mixed at 20°C with viscose Polymer Dope containing 6650gm of viscose polymer, 45790 gm of water and 3110 gm of NaOH having of 5-6% alkalinity to prevent thermal shock and the resulting thermoregulatory enriched viscose polymer dope was homogenized. The homogenized viscose polymer dope was further spun into a fiber using the process as disclosed in example 1.

### Example 10

### Example 10A- Preparation of micro emulsion

Eicosane (250 gms) was heated upto 50°C to form a mixture (250gm).

Surfonic N-400 nonylphenol 40-mole ethoxylate (surfactant) (28 gm) was dissolved and stirred in water 525ml to obtain 553 gm of aqueous phase. The aqueous phase (553 gm) and the mixture (250 gm) were homogenized in a high speed mixer (Ultraturrex) to obtain a micro-emulsion (803 gm).

### Example 10 B- Preparation of fiber

The micro-emulsion as prepared in Example 10A was mixed at 20⁰C with viscose Polymer Dope containing 6650gm of viscose polymer, 45790 gm of water and 3110 gm of NaOH having of 5-6% alkalinity to prevent thermal shock and the resulting thermoregulatory enriched viscose polymer dope was homogenized. The homogenized viscose polymer dope was further spun into a fiber using the process as disclosed in example 1.

### Second Set of Examples for antimicrobial fibers:

### Example 1

### Example 1A- Preparation of micro emulsion

Stearyl alcohol (225 gms) was heated until it melts and (25gm) of 2-Methyl-4-isothiazolin-3-one, water, phenoxyethanol Benzoic acid, 4-Hydroxy-methyl ester, Hydroxy-benzoic acid and propyl ester were added to form a mixture (250gm).

Surfonic N-400 nonylphenol 40-mole ethoxylate (surfactant) (28 gm) was dissolved and stirred in water 525ml to obtain 553 gm of aqueous phase. The aqueous phase (553 gm) and the mixture (250 gm) were homogenized in a high speed mixer (Ultraturrex) to obtain a micro-emulsion (803 gm).

### Example 1 B- Preparation fiber and fabric

The micro-emulsion as prepared in Example 1A was mixed at 20°C with viscose Polymer Dope containing 6650 gm of viscose polymer, 45790 of water and 3110 gm of NaOH to prevent thermal shock and the resulting antimicrobial enriched viscose polymer dope was homogenized. The homogenized viscose polymer dope was further spun in a spin bath using regeneration media comprising 120 gm/lit sulfuric acid, 200 gm/lit sodium sulfate salt and retardant (20 gm/lit) aluminum sulfate.

The filaments so obtained were stretched to straighten out the fibers which were further subjected to18% sulfuric acid treatment at 95°C for 15 min, washing, desulphurization with 0.6 gm/liter sodium hydroxide at 80°C for 15 min, bleaching with sodium hypochloride (1.2 gm /liter) at 45°C for 15 min, followed by water washing at 30°C for 15 minutes, neutralization with acetic acid (1gm/liter) at 45°C for 15 min and drying at 100°C.

The viscose fiber thus obtained contained micro-reservoirs having the entrapped releasable antimicrobial constituents. Although the micro reservoirs did not have any specific shape or size, they were found to be uniformly distributed throughout the body of the fiber.

### Example 2

### Example 2A- Preparation of micro emulsion

Stearyl alcohol (125 gm) and paraffin wax (100 gm) were heated together till it melted. To this molten liquid, (25gm) of 2-Methyl-4-isothiazolin-3-one, water, Phenoxyethanol Benzoic acid, 4-Hydroxy-methyl ester, Hydroxy-benzoic acid and propyl ester) were mixed to form a mixture (225gm). Surfonic N-150 (nonylphenol 15-mole ethoxylate) (surfactant) (84 gm) was dissolved and stirred in water 555.5 ml to obtain (639.5gm) of clear aqueous phase

The aqueous phase (639.5gm) and the mixture (225gm) were homogenized in a high speed mixer (Ultraturrex) to obtain an antimicrobial formulation in the form of micro-emulsion. (864.5gm)

### Example 2 B

The micro-emulsion as prepared in Example 2A was mixed at 20⁰C with viscose Polymer Dope containing 6650gm of viscose polymer, 45790 of water and 3110 gm of NaOH to prevent thermal shock and was spun or extruded into various forms such as fiber or film or cast into various shapes using the regeneration media as described in example 1.

### Example 3

### Example3 A

### Preparation of antimicrobial formulation

Similar micro-emulsion was prepared as provided in example 2 except that Surfonic DNP-40 (dinonylphenol ethoxylate glycol ether), fatty alcohol ether sulfates, alkyl carboxylates, alkyl benzene sulfonates, sulfosuccinates, polyethanoxy ether sulphate esters and polyethanoxy ether phosphate esters was used as surfactant.

### Example 3 B

The micro-emulsion as prepared in Example 3A was mixed at 20⁰C with viscose Polymer Dope containing 6650gm of viscose polymer, 45790 ml of water and 3110 gm of NaOH to prevent thermal shocks and was spun or extruded into various forms such as fiber or film or cast into various shapes using the regeneration media as described in example 1.

### Example 4

### Example 4 A

### Preparation of antimicrobial formulation

Polyvinyl laurate (225gm) was heated to form a molten liquid. To this 4,5-dichloro-n-octyl-4-isothiazoline-3-one[DCOIT] (25gm) was added to form a mixture (250gm).

Sodium dodecyl sulfate (surfactant) (84 gm) was dissolved and stirred in water (525 ml) to obtain (609gm) of clear aqueous phase.

The aqueous phase (609 gm) and the mixture (250 gm) were homogenized in a high speed mixer (Ultraturrex) to obtain a (859 gm) of micro-emulsion.

### Example 4 B

The micro-emulsion as prepared in Example 4A was mixed at 20⁰C with viscose Polymer Dope containing 6650gm of viscose polymer, 45790 ml of water and 3110 gm of NaOH having of 5-6% alkalinity to prevent thermal shock and was spun or extruded into various forms such as fiber or film or cast into various shapes using the regeneration media as described in example 1.

### Example 5

### Example 5A

### Preparation of antimicrobial formulation

Polypropylene glycol (200gm) and paraffin wax (25 gm) were heated together to form a molten liquid. To this 2-n-octyl-4-isothiazolin-3-one (25gm) was added to form a mixture (250gm).

Surfonic N-200 (nonylphenol 20-mole ethoxylate) (surfactant) (28 gm) was dissolved and stirred in water (525ml) to obtain (553 gm) of clear aqueous phase.

The aqueous phase (553 gm) and the mixture (250 gm) were homogenized in a high speed mixer (Ultraturrex) to obtain a micro-emulsion.

### Example 5 B

The micro-emulsion as prepared in Example 5A was added to viscose Polymer Dope was mixed at 20⁰C with viscose Polymer Dope containing 6650gm of viscose polymer, 45790 ml of water and 3110 gm of NaOH having of 5-6% alkalinity to prevent thermal shock and was spun or extruded into various forms such as fiber or film or cast into various shapes using the regeneration media as described in example 1.

### Example 6

### Example 6 A

### Preparation of antimicrobial formulation

Myristyl alcohol (125gm) and paraffin wax (100 gm) were heated together till it melted. To this molten liquid, (25gm) of Tolnaftate was mixed to form a mixture (225gm).

Surfonic N-150 (nonylphenol 15-mole ethoxylate) (surfactant) (84 gm) was dissolved and stirred in water 555.5 ml to obtain (639.5gm) of clear aqueous phase.

The aqueous phase (639.5gm) and the mixture (225gm) were homogenized in a high speed mixer (Ultraturrex) to obtain an antimicrobial formulation in the form of micro-emulsion. (864.5gm)

### Example 6 B

The micro-emulsion as prepared in Example 6 A was mixed at 20°C with viscose Polymer Dope containing 6650gm of viscose polymer, 45790 of water and 3110 gm of NaOH having of 5-6% alkalinity of 5-6% to prevent thermal shock and was spun or extruded into various forms such as fiber or film or cast into various shapes using the regeneration media as described in example 1.

### Example 7

### Example 7A

### Preparation of antimicrobial formulation

Stearyl alcohol (125gm) and Cetyl alcohol (100 gm) were heated together till it melted. To this molten liquid, (25gm) of 2-Methyl-4-isothiazolin-3-one, water, Phenoxyethanol Benzoic acid, 4-Hydroxy-methyl ester, Hydroxy-benzoic acid and propyl ester) were mixed to form a mixture (225gm).

Surfonic N-150 (nonylphenol 15-mole ethoxylate) (surfactant) (84 gm) was dissolved and stirred in water 555.5 ml to obtain (639.5gm) of clear aqueous phase.

The aqueous phase (639.5gm) and the mixture (225gm) were homogenized in a high speed mixer (Ultraturrex) to obtain an antimicrobial formulation in the form of micro-emulsion. (864.5gm)

### Example 7 B

The micro-emulsion as prepared in Example 7A was mixed at 20°C with viscose Polymer Dope containing 6650gm of viscose polymer, 45790 of water and 3110 gm of NaOH having of 5-6% alkalinity of 5-6% to prevent thermal shock and was spun or extruded into various forms such as fiber or film or cast into various shapes using the regeneration media as described in example 1.

### Example 8

### Example 8 A

### Preparation of antimicrobial formulation

Stearyl alcohol (125gm) and paraffin wax (100 gm) were heated together till it melted. To this molten liquid, (25gm) of 2-Methyl-4-isothiazolin-3-one, water, Phenoxyethanol Benzoic acid, 4-Hydroxy-methyl ester, Hydroxy-benzoic acid and propyl ester) were mixed to form a mixture (225gm). Surfonic N-150 (nonylphenol 15-mole ethoxylate) (surfactant) (84 gm) was dissolved and stirred in water 555.5 ml to obtain (639.5gm) of clear aqueous phase

The aqueous phase (639.5gm) and the mixture (225gm) were homogenized in a high speed mixer (Ultraturrex) to obtain an antimicrobial formulation in the form of micro-emulsion. (864.5gm)

### Example 8 B

The micro-emulsion as prepared in Example 8A was mixed at 20°C with viscose Polymer Dope containing 6650gm of viscose polymer, 45790 of water and 3110 gm of NaOH to prevent thermal shock and was spun or extruded into various forms such as fiber or film or cast into various shapes using the regeneration media as described in example 1.

### Example 9

### Example 9 A

### Preparation of antimicrobial formulation

Stearyl alcohol (125gm) and paraffin wax (100 gm) were heated together till it melted. To this molten liquid, (25gm) of clotrimazole was mixed to form a mixture (225gm).

Surfonic N-150 (nonylphenol 15-mole ethoxylate) (surfactant) (84 gm) was dissolved and stirred in water 555.5 ml to obtain (639.5gm) of clear aqueous phase

The aqueous phase (639.5gm) and the mixture (225gm) were homogenized in a high speed mixer (Ultraturrex) to obtain an antimicrobial formulation in the form of micro-emulsion. (864.5gm)

### Example 9 B

The micro-emulsion as prepared in Example 9A was mixed at 20°C with viscose Polymer Dope containing 6650gm of viscose polymer, 45790 of water and 3110 gm of NaOH to prevent thermal shock and was spun or extruded into various forms such as fiber or film or cast into various shapes using the regeneration media as described in example 1.

### Example 10

### Example 10 A

### Preparation of antimicrobial formulation

Stearyl alcohol (125gm) and paraffin wax (100 gm) were heated together till it melted. To this molten liquid, (25gm) of 2-Methyl-4-isothiazolin-3-one, water, Phenoxyethanol Benzoic acid, 4-Hydroxy-methyl ester, Hydroxy-benzoic acid and propyl ester) were mixed to form a mixture (225gm). Surfonic N-150 (nonylphenol 15-mole ethoxylate) (surfactant) (84 gm) was dissolved and stirred in water 555.5 ml to obtain (639.5gm) of clear aqueous phase

The aqueous phase (639.5gm) and the mixture (225gm) were homogenized in a high speed mixer (Ultraturrex) to obtain an antimicrobial formulation in the form of micro-emulsion. (864.5gm)

### Example 10 B

The micro-emulsion as prepared in Example 10A was mixed at 20°C with viscose Polymer Dope containing 6650gm of viscose polymer, 45790 of water and 3110 gm of NaOH to prevent thermal shock and was spun or extruded into various forms such as fiber or film or cast into various shapes using the regeneration media as described in example 1.

### Third Set of Examples for perfumed fibers:

### Example 1

### Example 1 A- Preparation of micro emulsion

Stearyl alcohol (225 gms) was heated until it melts and (25gm) of citrus musk was added to form a mixture (250gm).

Surfonic N-400 nonylphenol 40-mole ethoxylate (surfactant) (28 gm) was dissolved and stirred in water 525ml to obtain 553 gm of aqueous phase. The aqueous phase (553 gm) and the mixture (250 gm) were homogenized in a high speed mixer (Ultraturrex) to obtain a micro-emulsion (803 gm).

### Example 1 B- Preparation fiber and fabric

The micro-emulsion as prepared in Example 1A was mixed at 20°C with viscose Polymer Dope containing 450gm of viscose polymer, 3454 of water and 293 gm of NaOH having of 5-6% alkalinity to prevent thermal shock and the resulting perfume enriched viscose polymer dope was homogenized. The homogenized viscose polymer dope was further spun in a spin bath using regeneration media comprising 120 gm/lit sulfuric acid, 200 gm/lit sodium sulfate salt and retardant (20 gm/lit) aluminum sulfate.

The filaments so obtained were stretched to straighten out the fibers which were further subjected to18% sulfuric acid treatment at 95°C for 15 min, washing, desulphurization with 0.6 gm/liter sodium hydroxide at 80°C for 15 min, bleaching with sodium hypochloride (1.2 gm /liter) at 45°C for 15 min, followed by water washing at 30°C for 15 minutes, neutralization with acetic acid (1gm/liter) at 45°C for 15 min and drying at 100°C.

The viscose fiber thus obtained contained micro-reservoirs having the entrapped releasable perfume constituents. Although the micro reservoirs did not have any specific shape or size, they were found to be uniformly distributed throughout the body of the fiber.

### Example 2

### Example 2A- Preparation of micro emulsion

Stearyl alcohol (125gm) and paraffin wax (100 gm) were heated together till it melted. To this molten liquid, (25gm) of floral woody was mixed to form a mixture (225gm).

Surfonic N-150 (nonylphenol 15-mole ethoxylate) (surfactant) (84 gm) was dissolved and stirred in water 555.5 ml to obtain (639.5gm) of clear aqueous phase

The aqueous phase (639.5gm) and the mixture (225gm) were homogenized in a high speed mixer (Ultraturrex) to obtain an perfume formulation in the form of micro-emulsion. (864.5gm)

### Example 2 B

The micro-emulsion as prepared in Example 2A was mixed at 20°C with viscose Polymer Dope containing 400gm of viscose polymer, 3404 of water and 293 gm of NaOH having of 5-6% alkalinity of 5-6% to prevent thermal shock and was spun or extruded into various forms such as fiber or film or cast into various shapes using the regeneration media as described in example 1.

### Example 3

Example3 A

### Preparation of perfume formulation

Similar micro-emulsion was prepared as provided in example 2 except that Surfonic DNP-40 (dinonylphenol ethoxylate glycol ether), fatty alcohol ether sulfates, alkyl carboxylates, alkyl benzene sulfonates, sulfosuccinates, polyethanoxy ether sulphate esters and polyethanoxy ether phosphate esters was used as surfactant.

### Example 3 B

The micro-emulsion as prepared in Example 3A was mixed at 20°C with viscose Polymer Dope containing 400gm of viscose polymer, 2994 ml of water and 293 gm of NaOH having of 5-6% alkalinity to prevent thermal shocks and was spun or extruded into various forms such as fiber or film or cast into various shapes using the regeneration media as described in example 1.

### Example 4

### Example 4 A

### Preparation of perfume formulation

Polyvinyl laurate (225gm) was heated to form a molten liquid. To this woody musk (25gm) was added to form a mixture (250gm).

Sodium dodecyl sulfate (surfactant) (84 gm) was dissolved and stirred in water (525 ml) to obtain (609gm) of clear aqueous phase.

The aqueous phase (609 gm) and the mixture (250 gm) were homogenized in a high speed mixer (Ultraturrex) to obtain a (859 gm) of micro-emulsion.

### Example 4 B

The micro-emulsion as prepared in Example 4A was mixed at 20°C with viscose Polymer Dope containing 450gm of viscose polymer, 2595 ml of water and 293 gm of NaOH having of 5-6% alkalinity to prevent thermal shock and was spun or extruded into various forms such as fiber or film or cast into various shapes using the regeneration media as described in example 1.

### Example 5

### Example 5A

### Preparation of perfume formulation

Polypropylene glycol (200gm) and paraffin wax (25 gm) were heated together to form a molten liquid. To this fresh bouquet (25gm) was added to form a mixture (250gm).

Surfonic N-200 (nonylphenol 20-mole ethoxylate) (surfactant) (28 gm) was dissolved and stirred in water (525ml) to obtain (553 gm) of clear aqueous phase.

The aqueous phase (553 gm) and the mixture (250 gm) were homogenized in a high speed mixer (Ultraturrex) to obtain a micro-emulsion.

### Example 5 B

The micro-emulsion as prepared in Example 5A was added to viscose Polymer Dope was mixed at 20°C with viscose Polymer Dope containing 550gm of viscose polymer, 2551 ml of water and 293 gm of NaOH having of 5-6% alkalinity to prevent thermal shock and was spun or extruded into various forms such as fiber or film or cast into various shapes using the regeneration media as described in example 1.

### Example 6

### Example 6 A

### Preparation of perfume formulation

Myristyl alcohol (125gm) and paraffin wax (100 gm) were heated together till it melted. To this molten liquid, (25gm) of floral musk was mixed to form a mixture (225gm).

Surfonic N-150 (nonylphenol 15-mole ethoxylate) (surfactant) (84 gm) was dissolved and stirred in water 555.5 ml to obtain (639.5gm) of clear aqueous phase.

The aqueous phase (639.5gm) and the mixture (225gm) were homogenized in a high speed mixer (Ultraturrex) to obtain an perfume formulation in the form of micro-emulsion. (864.5gm)

### Example 6 B

The micro-emulsion as prepared in Example 6 A was mixed at 20°C with viscose Polymer Dope containing 400gm of viscose polymer, 3404 of water and 293 gm of NaOH having of 5-6% alkalinity of 5-6% to prevent thermal shock and was spun or extruded into various forms such as fiber or film or cast into various shapes using the regeneration media as described in example 1.

### Example 7

### Example 7A

### Preparation of perfume formulation

Stearyl alcohol (125gm) and Cetyl alcohol (100 gm) were heated together till it melted. To this molten liquid, (25gm) of citrus musk was mixed to form a mixture (225gm).

Surfonic N-150 (nonylphenol 15-mole ethoxylate) (surfactant) (84 gm) was dissolved and stirred in water 555.5 ml to obtain (639.5gm) of clear aqueous phase.

The aqueous phase (639.5gm) and the mixture (225gm) were homogenized in a high speed mixer (Ultraturrex) to obtain an perfume formulation in the form of micro-emulsion. (864.5gm)

### Example 7 B

The micro-emulsion as prepared in Example 7A was mixed at 20°C with viscose Polymer Dope containing 400gm of viscose polymer, 3404 of water and 293 gm of NaOH having of 5-6% alkalinity of 5-6% to prevent thermal shock and was spun or extruded into various forms such as fiber or film or cast into various shapes using the regeneration media as described in example 1.

### Example 8

### Example 8 A

### Preparation of perfume formulation

Stearyl alcohol (125gm) and paraffin wax (100 gm) were heated together till it melted. To this molten liquid, (25gm) of citrus musk woody was mixed to form a mixture (225gm).

Surfonic N-150 (nonylphenol 15-mole ethoxylate) (surfactant) (84 gm) was dissolved and stirred in water 555.5 ml to obtain (639.5gm) of clear aqueous phase

The aqueous phase (639.5gm) and the mixture (225gm) were homogenized in a high speed mixer (Ultraturrex) to obtain an perfume formulation in the form of micro-emulsion. (864.5gm)

### Example 8 B

The micro-emulsion as prepared in Example 8A was mixed at 20°C with viscose Polymer Dope containing 400gm of viscose polymer, 3404 of water and 293 gm of NaOH having of 5-6% alkalinity of 5-6% to prevent thermal shock and was spun or extruded into various forms such as fiber or film or cast into various shapes using the regeneration media as described in example 1.

### Example 9

### Example 9 A

### Preparation of perfume formulation

Stearyl alcohol (125gm) and paraffin wax (100 gm) were heated together till it melted. To this molten liquid, (25gm) of floral woody was mixed to form a mixture (225gm).

Surfonic N-150 (nonylphenol 15-mole ethoxylate) (surfactant) (84 gm) was dissolved and stirred in water 555.5 ml to obtain (639.5gm) of clear aqueous phase

The aqueous phase (639.5gm) and the mixture (225gm) were homogenized in a high speed mixer (Ultraturrex) to obtain an perfume formulation in the form of micro-emulsion. (864.5gem)

### Example 9 B

The micro-emulsion as prepared in Example 9A was mixed at 20°C with viscose Polymer Dope containing 400gm of viscose polymer, 3404 of water and 293 gm of NaOH having of 5-6% alkalinity of 5-6% to prevent thermal shock and was spun or extruded into various forms such as fiber or film or cast into various shapes using the regeneration media as described in example 1.

### Example 10

### Example 10 A

### Preparation of perfume formulation

Stearyl alcohol (125gm) and paraffin wax (100 gm) were heated together till it melted. To this molten liquid, (25gm) of fresh bouquet was mixed to form a mixture (225gm).

Surfonic N-150 (nonylphenol 15-mole ethoxylate) (surfactant) (84 gm) was dissolved and stirred in water 555.5 ml to obtain (639.5gm) of clear aqueous phase

The aqueous phase (639.5gm) and the mixture (225gm) were homogenized in a high speed mixer (Ultraturrex) to obtain an perfume formulation in the form of micro-emulsion. (864.5gm)

### Example 10 B

The micro-emulsion as prepared in Example 10A was mixed at 20°C with viscose Polymer Dope containing 400gm of viscose polymer, 3404 of water and 293 gm of NaOH having of 5-6% alkalinity of 5-6% to prevent thermal shock and was spun or extruded into various forms such as fiber or film or cast into various shapes using the regeneration media as described in example 1.

### Testing procedures:

The viscose rayon products as prepared in the above examples (1 to 10 of each set) were tested by using following test procedures:
1) Linear Density (Denier) of the viscose Fibers was determined by using standard ASTM Test Method (D 1577).
   The denier of the standard viscose fiber and the property-modified viscose fibers as prepared in accordance with examples 1B of each set was found to be uniform (1.5 denier) irrespective of the type and quantity of the property-modifying constituents.
2) Tensile strength and Young's modulus of viscose fiber samples were tested on an Instron tensile testing machine as per the ASTM C 1557-03 procedure at ambient temperature.
3) Emulsion stability: The stability of micro-emulsions as prepared in the above examples, was evaluated by keeping the same under observation in measuring cylinders for 3 days. During this period no phase separation was observed.
4) Feel of the fabric: The viscose rayon fabrics as prepared in the above examples and standard fabric were randomly given to twenty subjects and they were asked to evaluate the texture and feel of the fiber. The test fiber material was interchanged several times amongst the human subjects. Collective results as submitted by the human subjects confirmed that nobody could distinguish between the property-modified viscose fabrics prepared in accordance with the Examples provided above and the standard fabric.
5) Dyeability: The property-modified viscose rayon fabrics as prepared in the above examples and the standard fabric as described above were dyed uniformly with reactive dyes. No noticeable difference as to the Dyeability of the two respective viscose rayon fabrics, with and without property-modified constituent was reported.
6) Visual appearance of the property-modified viscose fiber was evaluated by methods as prescribed in AATCC 124. As far as parameters like % Loss in Dry Tenacity and % loss in dry elongation are concerned, these remained the same(< 10% and < 15% respectively)in the property-modified viscose rayon fiber and the standard fiber
7) Determination of enthalpy of the fabric specimen: the thermoregulatory properties of the specimen fabrics/fibers as prepared in examples 1 to 10 of the first set were evaluated by measuring respective enthalpies of the specimen. The enthalpies were measured using DSC (Differential scanning calorimetry) technique. The recorded enthalpies of the fiber and fabric obtained in examples 1 to 10 are provided in the Table 1.

**Table 1**

| Specimen No. | enthalpy J/g Fiber | Enthalpy J/g Fabric |
|---|---|---|
| 1 | 6.2 | 6.15 |
| 2 | 5.4 | 5.38 |
| 3 | 6.6 | 6.63 |
| 4 | 6 | 5.98 |
| 5 | 37 | 36.3 |
| 6 | 7.6 | 7.58 |
| 7 | 4.4 | 4.0 |
| 8 | 7.2 | 7.19 |
| 9 | 7.6 | 7.65 |
| 10 | 8.2 | 8.24 |

### 8. Testing of thermoregulatory Activity:

Free flowing robes made to fit the physique of twenty human volunteers, selected at random between ages 16 to 56, were made from undyed thermoregulatory viscose fabric prepared in accordance with this invention. Simultaneously, identical robes with same design were also made from undyed standard fabric (Viscose fabric without any thermo regulatory constituents).

A temperature monitored room was selected where the temperature could be precisely controlled. The temperature in the room was set at 21°C. The twenty human volunteers were requested to wear the robes and assemble in the room and be there in the room for a period of 30 min. They were made to randomly wear either a standard robe (robe made from standard fabric) or a robe made from the fabric of this invention. But they were not informed about the type of the robe that was being worn. After 30 minutes, all the volunteers were asked to step out into the outside non-air-conditioned environment, where the temperature was 28°C and they were asked to observe and note the time when they felt warm in the area covered by the robe.

Thereafter, all the volunteers switched their robes, ie: The volunteer given a robe of standard fabric, was allotted a robe made from the fabric of this invention and vise-a-versa. They were again asked to go back into the room and remain there for 30 min. and again step out into the external environment and again observe and note the time when they started feeling warm. The volunteers were then asked to give an evaluation of the time required to feel the warmth in both the instances.
The results of the experiments were as follows.
Sixteen volunteers opined that they felt warm in the standard fabric, at least on an average of 90 sec. quicker than the fabric of this invention.

Three volunteers could not sense significant difference in time and one volunteer recorded an earlier feeling of warmth in case of the fabric of this invention.

In case of direct comparison between the robes, 18 volunteers opined that they felt cooler and more comfortable wearing a ward-robe made from the fabric of this invention.

Two volunteers expressed no significant difference between the two. There was no volunteer who provided any reverse finding.

Similar test was conducted in which the volunteers were made to go from a hotter external environment at 30°C to an air-conditioned environment maintained at 21°C. 18 of the volunteers expressed that they felt warmer and more comfortable in the robe made from the fabric of this invention and the reported response time for feeling cold was on an average 3 min. longer. Two of the volunteers could not discern any significant difference between the two robes.

It is thus concluded that the fabric made in accordance with this invention exhibits thermoregulatory effect in either situation, ie when there is a rise in temperature and when there is a fall in the temperature.

### 9. Testing of antimicrobial constituent enriched fiber /fabrics

The antimicrobial constituent enriched viscose rayon fabrics as prepared in the above examples were tested for antimicrobial activity by various test procedures which included antimicrobial assays used to determine or confirm the effectiveness of treatments applied to medical devices, medical and commercial textiles, and other products.

Minimum sample requirements 9 square inches or 6 inches long, per test AATCC 100 (Part I) is a qualitative test for antibacterial activity.

Test viscose fiber/fabric specimens were placed into contact with a nutrient agar which had been streaked with either Staphylococcus aureus or Escherichia coli bacterial culture. Samples are inoculated with Staphylococcus and evaluated for percent reduction of the bacteria over selected contact periods of 1 - 24 hours. Turnaround Time is usually 5 days. The specimens were then incubated at a temperature 37 °C for a period of time of 24 hours. After the 24 hour incubation period, the samples were visually checked for the growth of bacteria.

The AATCC 147/100, Part III protocol provides a qualitative test for antifungal activity. Viscose fiber/ fabric specimens were subjected to the growth of a common fungus, Aspergillus niger, on Sabouraud Dextrose agar. Prewet specimens were inoculated and incubated at 28 °C for seven days. Specimens were then assessed for growth of the fungus. ASTM E2180-01 test method was used for testing inhibitory mold activity of the viscose product (fiber /fabric) prepared in accordance with this invention.

All the specimen viscose rayon fiber and fabrics as obtained in examples 1 to 10 of the second set were tested for antimicrobial activity by following the above mentioned test protocols. The results of the above mentioned test protocols are provided in the following tables:

**Table 2**

| Antimicrobial Activity of Viscose rayon Fibers | |
|---|---|
| **Sr. No.** | **% kill of bacteria** |
| Example 1 | 99.8 |
| Microbe tested : S. aureus | |
| Example 2 | 98.2 |
| Microbe tested : E. Coli | |
| Example 3 | 100 |
| Microbe tested : S. Aureus | |
| Example 4 | 97.4 |
| Microbe tested : E. coli | |
| Example 5 | 97.6 |
| Microbe tested : E. coli | |
| Example 7 | 100 |
| Microbe tested : S Aureus | |
| Example 8 | 100 |
| Microbe tested : S Aureus | |
| Example 10 | 100 |
| Microbe tested : S. aureus | |

**Table 3**

| **Antimicrobial Activity of Viscose rayon Fabric** | |
|---|---|
| **Sr. No.** | **% kill of bacteria** |
| Example 1 | 99.8 |
| Microbe tested : S. aureus | |
| Example 2 | 100 |
| Microbe tested : S. aureus | |
| Example 3 | 100 |
| Microbe tested : S. Aureus | |
| Example 4 | 98.2 |
| Microbe tested : E. coli | |
| Example 5 | 97.4 |
| Microbe tested : E. coli | |
| Example 7 | 100 |
| Microbe tested : S Aureus | |
| Example 8 | 97.6 |
| Microbe tested : E Coli | |
| Example 10 | 100 |
| Microbe tested : S. aureus | |

The fabric specimens obtained in examples 1 to 10 of the second set were subjected to 20 washes in normal laundry cycles using a detergent. The fabric after drying was tested for its antimicrobial activity by test protocols described above. The results are tabulated in table 4.

**Table 4**

| **Sr. No.** | **% kill of bacteria** |
|---|---|
| Example 1 | 99.4 |
| Microbe tested : S. aureus | |
| Example 2 | 97.6 |
| Microbe tested : S. aureus | |
| Example 3 | 97.4 |
| Microbe tested : S. Aureus | |
| Example 4 | 98 |
| Microbe tested : E. coli | |
| Example 5 | 96.4 |
| Microbe tested : E. coli | |
| Example 7 | 98.2 |
| Microbe tested : S. aureus | |
| Example 8 | 97.3 |
| Microbe tested : E. Coli | |
| Example 10 | 95 |
| Microbe tested : S. aureus | |

The viscose fiber and fabric viscose fabric specimens obtained in examples 6 and 9 of the second set contained antifungal agent and their antifungal activity was determined by AATCC 147 part III and in case of the all the specimens no fungal growth was observed meaning that all the specimen exhibited excellent antifungal activity. Furthermore, inhibitory mould activity of these specimen was tested by ASTM E 2180-01 test protocol and good inhibitory activity against ***Aspergillus niger*** was recorded.

The test fabrics made from these fibers thus exhibited significant antimicrobial activity both towards bacteria and fungi.

### 10. Perfume retension test:

Twenty pieces of standard size 20cmX20cm cut out from the freshly prepared viscose fiber as prepared in accordance with examples of the third set. Another set of Twenty pieces of the same size cut out of from the same fiber were subjected to 20 hot water washes with the intermittent drying period of 2 hrs. The drying was carried out in natural sunlight at temperature within the range of 25 to 45°C. The specimens so prepared were randomly distributed to human subjects for testing the aroma of the specimen. The specimen was interchanged amongst the subjects. No noticeable difference in odor of the two respective viscose fiber specimens was reported and therefore it is concluded that the viscose fiber specimen retained the perfume additive even after exposure to varying conditions.

While considerable emphasis has been placed herein on the specific steps of the preferred embodiment, it will be appreciated that many alterations can be made and that many modifications can be made in the preferred embodiment without departing from the principles of the invention. These and other changes in the preferred embodiment as well as other embodiments of the invention will be apparent to those skilled in the art from the disclosure herein, whereby it is to be distinctly understood that the foregoing descriptive matter is to be interpreted merely as illustrative of the invention and not as a limitation.

## Claims

1. A formulation meant for manufacture of viscose rayon products comprising:
■ at least one water insoluble constituent, in the form of micro-reservoirs, said constituent being selected from the group consisting of thermoregulatory constituents in an amount of 0.01 to 7%, antimicrobial constituents in an amount of 0.001 to 3.5% and perfume constituents in an amount of 0.001 to 3.5%, said amounts being expressed with respect to the total mass of the formulation;
■ at least one water soluble nonionic surfactant having HLB value in the range of 9 to 40,said surfactant being in the range of 0.001 to 3 % of the mass of the formulation,
■ viscose polymer (Cellulose Xanthate) in the range of 1 to 15% of the mass of the formulation,
■ an alkali in the range of 2 to 7% of the mass of the formulation,
■ water in the range of 50 % to 90 % of the mass of the formulation, and
■ in the case when the water insoluble constituent is an antimicrobial constituent or a perfume constituent, at least one non-aqueous solvent in the range of 0.01 to 7% of the mass of the formulation.

2. A formulation as claimed in claim 1, wherein the water insoluble constituent is a thermoregulatory constituent having a melting point in the range where the thermoregulatory effect is desired, in the range of 0.01 to 7% of the mass of the formulation.

3. A formulation as claimed in claim 2, wherein the thermoregulatory constituent is at least one selected from the group consisting of nonadecane, eicosane, heptadecane, octadecane, pentadecane, hexadecane, decyl alcohol, lauryl alcohol and myristyl alcohol.

4. A formulation as claimed in claim 1, wherein the surfactant is at least one non-ionic surfactant selected from the group of alkyl phenoxy ethoxylated non-ionic surfactants which include Polyoxyethylene(8) isooctylphenyl ether, Nonylphenol polyethylene glycol ether, Polyoxyethylene(9) nonylphenyl ether, Polyoxyethylene(10) isooctylphenyl ether, Polyoxyethylene(12) nonylphenyl ether, Polyoxyethylene(12) isooctylphenyl ether, Polyoxyethylene(40) nonylphenyl ether, Polyoxyethylene(40) isooctylphenyl ether, Polyoxyethylene(100) nonylphenyl ether, Polyoxyethylene(150) dinonylphenyl ether, Surfonic N-95(Poly (oxy-1, 2-ethanediyl), alpha-(nonyl phenyl)-omega-hydroxyl-glycol ether) (nonylphenol 9.5-mole ethoxylate), Surfonic N-95(Poly (oxy-1, 2-ethanediyl), alpha- (nonyl phenyl)-omega-hydroxyl-glycol ether) (nonylphenol 9.5-mole ethoxylate), Surfonic N-120(nonylphenol 12-mole ethoxylate), Surfonic N-150 (nonylphenol 15-mole ethoxylate), Surfonic N-200 (nonylphenol 20-mole ethoxylate), Surfonic N-300( nonylphenol 30-mole ethoxylate), Surfonic N-400 nonylphenol 40-mole ethoxylate, Surfonic LF-7 (Alkyl polyoxyalkylene ether), Surfonic LF-17 (ethoxylated and propoxylated linear primary 12-14 carbon number alcohol), Igepal CO-630 (nonylphenoxy poly(ethyleneoxy)ethanol,branched), Surfonic DNP-40 (dinonylphenol ethoxylate glycol ether); ethoxylated alkyl alcohol surfactants, Polyethylene-block-Poly propylene glycol-block-polyethylene glycol and Ethylenediamine tetrakis(propylene oxide-block-ethylene oxide) tetrol.

5. A formulation as claimed in claim 1, wherein the preferred HLB value of the surfactant is between 16 and 40 or wherein the average mean size of the micro-reservoir is in the range of 5 nm to 2000 nm.

6. A thermoregulatory viscose rayon product being at least one product selected from the group consisting of fiber, yarn and fabric manufactured from a formulation as claimed in claim 2.

7. A formulation as claimed in claim 1, wherein the formulation is an antimicrobial viscose formulation having:
• at least one non-aqueous solvent in the range of 0.01 to 7% of the mass of the formulation,
• at least one water insoluble antimicrobial constituent soluble in said solvent, in the range of 0.001 to 3.5% of the mass of the formulation,
• at least one water soluble surfactant having HLB value in the range of 9 to 40, in the range of 0.001 to 3 % of the mass of the formulation,
• viscose polymer (cellulose xanthate) in the range of 1% to 15% of the mass of the formulation,
• an alkali in the range of 2% to 7 % of the mass of the formulation, and
• water in the range of 50% to 90 % with respect to the mass of the formulation.

8. A formulation as claimed in claim 7, wherein the antimicrobial constituent is at least one selected from the group consisting of 2-Methyl-4-isothiazolin-3-one, Phenoxyethanol, Benzoic acid 4-Hydroxy-methyl ester, Hydroxy-benzoic acid propyl ester, o- (2-naphthyl) methyl (3-methylphenyl) thiocarbamate, 5-chloro-2-(2,4-dichlorophenoxy)phenol, 4,5-dichloro-n-octyl-4-isothiazoline-3-one [DCOIT], 2-n-octyl-4-isothiazolin-3-one, 1-phenoxy propan-2-ol, pentachlorophenol, 5-chloro-2-dichlorophenoxy phenol, clotrimazole, p-chloro-m-xylenol and chloroquinaldol.

9. A formulation as claimed in claim 7, wherein the solvent is at least one solvent selected from the group of solvents consisting of C₁₀-C₄₄ alkanes (paraffinic hydrocarbons), polyethylene, polypropylene, polypropylene glycol, polytetramethylene glycol, polypropylene malonate, polyneopentyl glycol sebacate, polypentane glutarate, polyvinyl myristate, polyvinyl stearate, polyvinyl laurate, polyhexadecyl methacrylate, polyoctadecyl methacrylate, polyethylene oxides, polyethylene glycols, Arachidyl alcohol, behenyl alcohol, Selachyl alcohol, chimimyl alcohol, polyesters, di-iso decyl phthalate, benzyl alcohol, C4 -C30 aliphatic alcohols ,C4 -C30 saturated hydrocarbons, C₄ -C₃₀ monounsaturated hydrocarbons, natural oils and mineral oil paraffins.

10. An antimicrobial viscose rayon product selected from the group consisting of fiber, yarn and fabric manufactured from a formulation as claimed in claim 7.

11. A formulation as claimed in claim 1, wherein the formulation is a perfumed viscose formulation comprising:
• at least one non-aqueous solvent in the range of 0.01 to 7% of the mass of the formulation,
• at least one water insoluble perfume constituent soluble in said solvent, in the range of 0.001 to 3.5 % of the mass of the formulation,
• at least one water soluble nonionic surfactant having HLB value in the range of 9 to 40, in the range of 0.001 to3% of the mass of the formulation,
• viscose polymer (cellulose xanthate) in the range of 1 to 15%,
• an alkali in the range of 2 to 7% of the mass of the formulation and
• water in the range of 50% to 90% of the mass of the formulation.

12. A formulation as claimed in claim 11, wherein the perfume constituent is at least one selected from a group consisting of citrus musk, floral woody, citrus musk woody, fresh bouquet, musk, floral musk, lavender oil, jasmine oil, rose oil, cedarwood oil, sandalwood oil, orange oil and lemon oil.

13. A formulation as claimed in claim 11, wherein the solvent is at least one solvent selected from a group of solvents consisting of C₁₀-C₄₄ alkanes (paraffinic hydrocarbons), polyethylene, polypropylene, polypropylene glycol, polytetramethylene glycol, polypropylene malonate, polyneopentyl glycol sebacate, polypentane glutarate, polyvinyl myristate, polyvinyl stearate, polyvinyl laurate, polyhexadecyl methacrylate, polyoctadecyl methacrylate, polyethylene oxides, polyethylene glycols, Arachidyl alcohol, behenyl alcohol, Selachyl alcohol, chimimyl alcohol, polyesters, di-iso decyl phthalate, benzyl alcohol, C4 -C30 aliphatic alcohols ,C4 -C30 saturated hydrocarbons, C₄ -C₃₀ monounsaturated hydrocarbons, natural oils and mineral oil paraffins.

14. A perfumed viscose rayon product selected from the group consisting of fiber, yarn and fabric manufactured from a formulation as claimed in claim 11.

15. A process of preparation of a formulation meant for manufacture of viscose rayon products as claimed in claim 1, comprising the following steps:
• selecting a non-water-soluble constituent from the group consisting of thermoregulatory constituents, antimicrobial constituents and perfume constituents, mixing with at least one non-aqueous solvent in the case of antimicrobial constituents and perfume constituents and heating said constituent between 25°C and 95°C to form a non-aqueous phase;
• dissolving and stirring at least one water soluble nonionic surfactant having HLB value in the range of 9 to 40, optionally with a cosurfactant, in water to obtain an aqueous phase;
• admixing and homogenizing the non-aqueous phase with the aqueous phase to obtain a micro-emulsion; and
• dispersing the micro-emulsion throughout the mass of the viscose polymer dope to obtain a preform mass wherein the water insoluble constituent is in the form of evenly dispersed micro-reservoirs.

## Patentansprüche

1. Eine Rezeptur für die Herstellung von Viskosefaserprodukten, bestehend aus Folgendem:
• mindestens ein wasserunlöslicher Bestandteil in Form von Mikroreservoirs; besagter Bestandteil aus der Gruppe , die zu 0,01 bis 7% aus thermoregulatorischen Bestandteilen, zu 0,001 bis 3,5% aus antimikrobiellen Bestandteilen und zu 0,001 bis 3,5% aus Duftstoffen besteht, gewählt ist; besagte Mengen werden hinsichtlich der Gesamtmasse der Rezeptur ausgedrückt;
• mindestens ein wasserlösliches nichtionisches oberflächenaktives Stoffs , mit einem HLB-Wert von 9 bis 40; besagtes oberflächenaktives Stoff befindet sich im Bereich von 0,001 bis 3% der Rezepturmasse,
• Viskosepolymer (Zellulosexanthogenat) im Bereich von 1 bis 15% der Rezepturmasse,
• ein Alkali im Bereich von 2 bis 7% der Rezepturmasse;
• Wasser im Bereich von 50% bis 90% der Rezepturmasse, und
• für den Fall, dass der wasserunlösliche Bestandteil ein antimikrobieller Bestandteil oder ein Duftstoff ist, mindestens ein nichtwässriges Lösungsmittel im Bereich von 0,01 bis 7% der Rezepturmasse.

2. Eine Rezeptur nach Anspruch 1, wobei der wasserunlösliche Bestandteil ein thermoregulatorischer Bestandteil ist, dessen Schmelzpunkt in einem Bereich liegt, wo der thermoregulatorische Effekt im Bereich von 0,01 bis 7% der Rezepturmasse verlangt ist.

3. Eine Rezeptur nach Anspruch 2, wobei der thermoregulatorische Bestandteil zumindest ein Bestandteil aus einer Gruppe, die aus Nonadecan, Eicosan, Heptadecan, Octadecan, Pentadecan, Hexadecan, Decylalkohol, Laurylalkohol und Myristylalkohol besteht, gewählt ist.

4. Eine Rezeptur nach Anspruch 1, wobei das oberflächenaktiv Stoff zumindest ein nichtionisches oberflächenaktives Stoff ist, welches aus einer Gruppe von Alkylphenol-Ethoxylaten nichtionischer oberflächenaktiv Stoff gewählt wird, die Folgendes beinhaltet: Polyoxyethylen (8) Isooctyl-Phenyl Ether, Nonyl-Phenol-Polyethylen-Glykol-Ether, Polyoxyethylen (9) Nonyl-Phenyl Ether, Polyoxyethylen (10) Isooctyl-Phenyl Ether, Polyoxyethylen (12) Nonyl-Phenyl Ether, Polyoxyethylen (12) Isooctyl-Phenyl Ether, Polyoxyethylen (40) Nonyl-Phenyl Ether, Polyoxyethylen (40) Isooctyl-Phenyl Ether, Polyoxyethylen (100) Nonyl-Phenyl Ether, Polyoxyethylen (150) Di-Nonylphenyl Ether, Surfonic N-95 (Poly (oxy-1, 2-ethanediyl), Alpha-(Nonyl-Phenyl)-Omega-Hydroxyl-Glykolether) (Nonyl-Phenol 9.5 Mol Ethoxylat), Surfonic N-95 (Poly (oxy-1, 2-ethanediyl), Alpha- (Nonyl-Phenyl)-Omega-Hydroxyl-Glykolether) (Nonyl-phenol 9.5 Mol Ethoxylat), Surfonic N-120 (Nonyl-Phenol 12 Mol Ethoxylat), Surfonic N-150 (Nonyl-Phenol 15 Mol Ethoxylat), Surfonic N-200 (Nonyl-Phenol 20 Mol Ethoxylat), Surfonic N-300 (Nonyl-Phenol 30 Mol Ethoxylat), Surfonic N-400 Nonyl-Phenol 40 Mol Ethoxylat, Surfonic LF-7 (Alkyl Polyoxyalkylen Ether), Surfonic LF-17 (Ethoxylierte und propoxylierte lineare, primäre 12-14 Kohlenstoffzahl Alkohol), Igepal CO-630 (Nonyl-Phenoxy Poly(ethylenoxid) Ethanol, verzweigt), Surfonic DNP-40 (Di-Nonylphenol Ethoxylat Glykolether); Ethoxylierte Alkyl-Alkohol- oberflächenaktive Stoffe , Polyethylenblock-Poly Propylen Glykolblock-Polyethylen Glykol und Ethylendiamin Tetrakis(propylen Oxidblock-Ethylen Oxid)tetrol.

5. Eine Rezeptur nach Anspruch 1, wobei der bevorzugte HLB-Wert des oberflächenaktives Stoffes zwischen 16 und 40 liegt oder wobei das durchschnittliche Mittelmaß der Mikroreservoirs im Bereich von 5 nm bis 2000 nm liegt.

6. Ein thermoregulatorisches Viskosefaserprodukt, von dem mindestens ein Produkt aus der Gruppe gewählt wird, die aus Textilfaser, Garn und Stoff besteht, welcher aus einer Rezeptur nach Anspruch 2 hergestellt wird.

7. Eine Rezeptur nach Anspruch 1, wobei die Rezeptur eine antimikrobielle Viskosezeptur ist, bestehend aus Folgendem:
• mindestens ein nichtwässriges Lösungsmittel im Bereich von 0,01 bis 7% der Rezepturmasse.
• mindestens ein wasserunlöslicher antimikrobieller Bestandteil auflösbar in besagtem Lösungsmittel im Bereich von 0,001 bis 3,5% der Rezepturmasse.
• mindestens ein wasserlösliches oberflächenaktives Stoff , das einen HLB-Wert von 9 bis 40 hat und im Bereich von 0,001 bis 3% der Rezepturmasse liegt,
• Viskosepolymer (Zellulosexanthogenat) im Bereich von 1% bis 15% der Rezepturmasse,
• ein Alkali im Bereich von 2% bis 7% der Rezepturmasse, und
• Wasser im Bereich von 50% bis 90% hinsichtlich der Rezepturmasse.

8. Eine Rezeptur nach Anspruch 7, wobei der antimikrobielle Bestandteil mindestens ein gewählter Bestandteil von der Gruppe ist, welche aus Folgendem besteht: 2-Methyl-4-isothiazolin-3-one, Phenoxyethanol, 4-Hydroxybenzoesäuremethylester, Hydroxybenzoesäurepropylester, o-(2-Naphthyl) Methyl (3-Methyl-Phenyl) Thiocarbamat, 5-Chloro-2-(2,4-Dichlorphen Oxid)phenol, 4,5-Dichlor-Noctyl-4-Isothiazolin-3-one [DCOIT], 2-n-octyl-4-isothiazolin-3-one, 1-Phenoxy Propan-2-ol, Pentachlorphenol, 5-Chlor-2-Dichlor-Phenoxy Phenol, Clotrimazol, P-Chlor-m-xylenol und Chlorquinaldol.

9. Eine Rezeptur nach Anspruch 7, wobei das Lösungsmittel zumindest ein gewähltes Lösungsmittel aus einer Gruppe von Lösungsmitteln ist, welche aus Folgendem besteht: C₁₀-C₄₄ Alkane (paraffinische Kohlenwasserstoffe), Polyethylen, Polypropylen, Polypropylen Glykol, Polytetramethylen Glykol, Polypropylen Malonat, Polyneopentyl Glykol Sebacat, Polypentan Glutarat, Polyvinyl Myristat, Polyvinyl Stearat, Polyvinyl Laurat, Poly Hexadecyl Methacrylat, Poly Octadecyl Methacrylat, Polyethylen Oxide, Polyethylen Glykole, Arachidyl Alkohol, Behenyl Alkohol, Selachyl Alkohol, Chimimyl Alkohol, Polyester, Di-Iso Decyl Phthalat, Benzyl Alkohol, C₄ -C₃₀ Aliphatische Alkohole, C₄ -C₃₀ gesättigte Kohlenwasserstoffe, C₄ -C₃₀ einfach ungesättigte Kohlenwasserstoffe, natürliche Öle und Mineralöl-Paraffine.

10. Ein antimikrobielles Viskosefaserprodukt, welches aus der Gruppe gewählt wird, die aus Textilfaser, Garn und Stoff besteht, welcher aus einer Rezeptur nach Anspruch 7 hergestellt wird.

11. Eine Rezeptur nach Anspruch 1, wobei die Rezeptur eine parfümierte Viskoserezeptur ist, bestehend aus Folgendem:
• mindestens ein nichtwässriges Lösungsmittel im Bereich von 0,01 bis 7% der Rezepturmasse.
• mindestens ein wasserunlösliches Parfümbestandteil auflösbar in besagtem Lösungsmittel im Bereich von 0,001 bis 3,5% der Rezepturmasse,
• mindestens ein wasserlösliches nichtionisches oberflächenaktives Stoff , das einen HLB-Wert von 9 bis 40 hat und im Bereich von 0,001 bis 3% der Rezepturmasse liegt,
• Viskosepolymer (Zellulosexanthogenat) im Bereich von 1 bis 15%,
• ein Alkali im Bereich von 2 bis 7% der Rezepturmasse und
• Wasser im Bereich von 50% bis 90% der Rezepturmasse.

12. Eine Rezeptur nach Anspruch 11, wobei der Parfümbestandteil mindestens ein gewählter Bestandteil aus einer Gruppe ist, die aus Folgendem besteht: Zitrus-Moschus, floral-holzig, Zitrus-Moschus-holzig, frisches Bouquet, Moschus, floraler Moschus, Lavendelöl, Jasminöl, Rosenöl, Zedernholzöl, Sandelholzöl, Orangenöl und Zitronenöl.

13. Eine Rezeptur nach Anspruch 11, wobei das Lösungsmittel mindestens ein Lösungsmittel ist, welches aus einer Gruppe von Lösungsmitteln gewählt wird, die aus Folgendem besteht: C₁₀-C₄₄ Alkane (paraffmische Kohlenwasserstoffe), Polyethylen, Polypropylen, Polypropylen Polypropylen Malonat, Polyneopentyl Glykol, Polytetramethylen Glykol, Glykol Sebacat, Polypentan Glutarat, Polyvinyl Myristat, Polyvinyl Stearat, Polyvinyl Laurat, Polyhexadecyl Methacrylat, Polyoctadecyl Methacrylat, Polyethylen Oxide, Polyethylen Glykole, Arachidyl Alkohol, Behenyl Alkohol, Selachyl Alkohol, Chimimyl Alkohol, Polyester, Di-Iso Decyl Phthalat, Benzyl Alkohol, C₄-C₃₀ Aliphatische Alkohole, C₄ -C₃₀ gesättigte Kohlenwasserstoffe, C₄ -C₃₀ einfach ungesättigte Kohlenwasserstoffe, natürliche Öle und Mineralöl-Paraffine.

14. Ein parfümiertes Viskosefaserprodukt, welches aus der Gruppe gewählt wird, die aus Textilfaser, Garn und Stoff besteht, welcher aus einer Rezeptur nach Anspruch 11 hergestellt wird.

15. Ein Vorbereitungsprozess einer Rezeptur, der für die Herstellung von Viskosefaserprodukten nach Anspruch 1 bestimmt ist, beinhaltet die folgenden Schritte:
• Auswahl eines nichtwasserlöslichen Bestandteils aus der Gruppe, bestehend aus thermoregulierenden Bestandteilen, antimikrobiellen Bestandteilen und Duft-Bestandteilen; Mischung mit mindestens einem nichtwässrigen Lösungsmittel im Fall von antimikrobiellen Bestandteilen und Duft-Bestandteilen und Erwärmung besagter Bestandteile zwischen 25°C und 95°C, um eine nichtwässrige Phase zu bilden;
• Auflösung und Vermischung mindestens eines wasserlöslichen nichtionischen Bestandteils, das einen HLB-Wert von 9 bis 40 hat, wahlweise mit einem Ko- oberflächenaktives Stoff, im Wasser, um eine wässrige Phase zu erreichen;
• Vermischung und Homogenisierung der nichtwässrigen Phase mit der wässrigen Phase, um eine Mikroemulsion zu erhalten; und
• Dispergieren der Mikroemulsion durch die gesamte Masse der Viskosefasersubstanz, um eine Vorform-Masse zu erhalten, worin der wasserunlösliche Bestandteil in der Form von gleichmäßigen dispergierten Mikroreservoirs vorhanden ist.

## Revendications

1. Une formulation destinée à la fabrication de produits de rayonne viscose comprenant :
• au moins un constituant insoluble dans l'eau, sous la forme de microréservoirs, ledit constituant étant choisi dans le groupe constitué des constituants de thermorégulation en une quantité comprise entre 0,01 et 7%, des constituants antimicrobiens en une quantité comprise entre 0,001 et 3,5% et des constituants de parfum en une quantité comprise entre 0,001 et 3,5%, lesdites quantités étant exprimées par rapport à la masse totale de la formulation ;
• au moins un tensioactif non ionique insoluble dans l'eau présentant une valeur HLB dans l'échelle de 9 à 40, ledit tensioactif étant compris entre 0,001 et 3% de la masse de la formulation,
• du viscose polymère (xanthate de cellulose) compris entre 1 et 15% de la masse de la formulation,
• un alcali compris entre 2 et 7% de la masse de la formulation,
• de l'eau en une quantité comprise entre 50% et 90% de la masse de la formulation, et
• lorsque le constituant insoluble dans l'eau est un constituant antimicrobien ou un constituant de parfum, au moins un solvant non aqueux en une quantité comprise entre 0,01 et 7% de la masse de la formulation.

2. Une formulation selon la revendication 1, dans laquelle le constituant insoluble dans l'eau est un constituant de thermorégulation ayant un point de fusion dans le domaine où l'effet de thermorégulation est désiré, en une quantité comprise entre 0,01 et 7% de la masse de la formulation.

3. Une formulation selon la revendication 2, dans laquelle le constituant de thermorégulation est un constituant choisi au moins parmi le groupe constitué de nonadécane, éicosane, heptadécane, octadécane, pentadécane, hexadécane, alcool décylique, alcool laurylique et alcool myristylique.

4. Une formulation selon la revendication 1, dans laquelle le tensioactif est au moins un tensioactif non ionique choisi parmi les tensioactifs non ioniques du groupe alkyle phénoxy éthoxylé incluant l'éther polyoxyéthylène(8) isooctylphénylique, l'éther polyéthylène-glycol de nonylphénol, l'éther polyoxyéthylène(9) nonylphénylique, l'éther polyoxyéthylène(10) isooctylphénylique, l'éther polyoxyéthylène(12) nonylphénylique, l'éther polyoxyéthylène(12) isooctylphénylique, l'éther polyoxyéthylène(40) nonylphénylique, l'éther polyoxyéthylène(40) isooctylphénylique, l'éther polyoxyéthylène(100) nonylphénylique, l'éther polyoxyéthylène(150) dinonylphénylique, le Surfonic N-95(Poly (oxy-1, 2-éthanediyle), alpha- (nonylphényle)-oméga-hydroxyle-glycol éther) (éthoxylate de nonylphénol 9,5 moles), le Surfonic N-95(Poly (oxy-1, 2-éthanediyle), alpha- (nonylphényle)-oméga-hydroxyle-glycol éther) (éthoxylate de nonylphénol 9,5 moles), le Surfonic N-120(éthoxylate de nonylphénol 12 moles), le Surfonic N-150 (éthoxylate de nonylphénol 15 moles), le Surfonic N-200 (éthoxylate de nonylphénol 20 moles), le Surfonic N-300(éthoxylate de nonylphénol 30 moles), le Surfonic N-400 éthoxylate de nonylphénol 40 moles, le Surfonic LF-7 (éther de polyoxyalkylène alkyle), le Surfonic LF-17 (alcool nombre de carbone 12 à 14 primaire linéaire éthoxylé et propoxylé), l'Igepal CO-630 (nonylphénoxy poly(éthylèneoxy)éthanol, ramifié), le Surfonic DNP-40 (éther glycolique de dinonylphénol éthoxylé) ; des tensioactifs d'alcool alkylique éthoxylés, polyéthylène-bloc-poly propylène glycol-bloc-polyéthylène glycol et l'éthylène diamine tétrakis(propylène oxyde-bloc-oxyde d'éthylène) tétrol.

5. Une formulation selon la revendication 1, dans laquelle la valeur HLB préférée du tensioactif est comprise entre 16 et 40 ou dans laquelle la taille moyenne du microréservoir comprise entre 5 nm et 2000 nm.

6. Un produit de rayonne viscose thermorégulateur étant au moins un produit choisi dans le groupe constitué de fibres, fils et tissus fabriqués à partir d'une formulation selon la revendication 2.

7. Une formulation selon la revendication 1, dans laquelle la formulation est une formulation de viscose antimicrobienne comprenant :
• au moins un solvant non-aqueux compris entre 0,01 et 7% de la masse de la formulation,
• au moins un constituant antimicrobien insoluble dans l'eau soluble dans ledit solvant, en une quantité comprise entre 0,001 et 3,5% de la masse de la formulation,
• au moins un tensioactif soluble dans l'eau ayant une valeur HLB dans l'échelle de 9 à 40, en une quantité comprise entre 0,001 et 3% de la masse de la formulation,
• du viscose polymère (xanthate de cellulose) en une quantité comprise entre 1% et 15% de la masse de la formulation,
• un alkali compris entre 2% et 7% de la masse de la formulation, et
• de l'eau en une quantité comprise entre 50% et 90% par rapport à la masse de la formulation.

8. Une formulation selon la revendication 7, dans laquelle le constituant antimicrobien est au moins un constituant choisi dans le groupe constitué de 2-méthyl-4-isothiazoline-3-une, phénoxyéthanol, ester d'acide benzoïque 4-hydroxy-méthyl, ester propylique hydroxy benzoïque, o- (2-naphtyle) méthyl (3-méthylphényle) thiocarbamate, 5-chloro-2-(2,4-dichlorophénoxy)phénol, 4,5-dichloro-n-octyle-4-isothiazoline-3-une [DCOIT], 2-n-octyle-4-isothiazoline-3-une, 1-phénoxy propane-2-ol, pentachlorophénol, 5-chloro-2-dichlorophénoxy phénol, clotrimazole, p-chloro-m-xylénol et chloroquinaldol.

9. Une formulation selon la revendication 7, dans laquelle le solvant est au moins un solvant choisi dans le groupe de solvants constitué d'alcanes C₁₀-C₄₄ (hydrocarbures paraffiniques), de polyéthylène, de polypropylène, de glycol polypropylénique, de glycol polytétraméthylène, de malonate polypropylène, de sébacate de glycol polynéopentyle, de glutarate de polypentane, de myristate de polyvinyle, de stéarate de polyvinyle, de laurate de polyvinyle, de méthacrylate de polyhexadécyle, de méthacrylate polyoctadécyle, des oxydes de polyéthylène, des polyéthylène glycols, de l'alcool arachidylique, de l'alcool béhénylique, de l'alcool sélachyle, de l'alcool chimimyle, des polyesters, de phtalate décyle di-iso, de l'alcool benzylique, des alcools aliphatiques C4 -C30, des hydrocarbures saturés C4 -C30, des hydrocarbures mono insaturés C₄ -C₃₀, des huiles naturelles et des paraffines d'huile minérale.

10. Un produit de rayonne viscose antimicrobien choisi dans le groupe constitué de fibres, fils et tissus fabriqués à partir d'une formulation selon la revendication 7.

11. Une formulation selon la revendication 1, dans laquelle la formulation est une formulation de viscose parfumée comprenant :
• au moins un solvant non-aqueux compris entre 0,01 et 7% de la masse de la formulation,
• au moins un constituant de parfum insoluble dans l'eau soluble dans ledit solvant, en une quantité comprise entre 0,001 et 3,5% de la masse de la formulation,
• au moins un tensioactif non ionique soluble dans l'eau ayant une valeur HLB dans l'échelle de 9 à 40, compris entre 0,001 et 3% de la masse de la formulation,
• du viscose polymère (xanthate de cellulose) compris entre 1 et 15%,
• un alkali compris entre 2 et 7% de la masse de la formulation et
• de l'eau en une quantité comprise entre 50% et 90% de la masse de la formulation.

12. Une formulation selon la revendication 11, dans laquelle le constituant de parfum est au moins un constituant choisi dans le groupe constitué d'agrume musqué, de floral boisé, d'agrume musqué boisé, de bouquet frais, de musc, de foral musqué, d'huile de lavande, d'huile de jasmin, d'huile de rose, d'huile de bois de cèdre, d'huile de bois de santal, d'huile d'orange et d'huile de citron.

13. Une formulation selon la revendication 11, dans laquelle le solvant est au moins un solvant choisi dans le groupe de solvants constitué de d'alcanes C10-C44 (hydrocarbures paraffiniques), de polyéthylène, de polypropylène, de glycol polypropylénique, de glycol polytétraméthylène, de malonate polypropylène, de sébacate de glycol polynéopentyle, de glutarate de polypentane, de myristate de polyvinyle, de stéarate de polyvinyle, de laurate de polyvinyle, de méthacrylate polyhexadécyle, de méthacrylate polyoctadécyle, des oxydes de polyéthylène, des polyéthylène glycols, de l'alcool arachidylique, de l'alcool béhénylique, de l'alcool sélachyle, de l'alcool chimimyle, des polyesters, de phtalate de décyle di-iso, de l'alcool benzylique, des alcools aliphatiques C4 -C30, des hydrocarbures saturés C4 - C30, des hydrocarbures mono insaturés C₄ -C₃₀, des huiles naturelles et des paraffines d'huile minérale.

14. Un produit de rayonne viscose parfumé choisi dans le groupe constitué de fibres, fils et tissus fabriqués à partir d'une formulation selon la revendication 11.

15. Un processus de préparation d'une formulation destinée à la fabrication de produits de rayonne viscose selon la revendication 1, comprenant les étapes suivantes :
• la sélection d'un constituant non soluble dans l'eau à partir du groupe constitué des constituants de thermorégulation, des constituants antimicrobiens et des constituants de parfum, le mélange avec au moins un solvant non aqueux dans le cas des constituants antimicrobiens et des constituants de parfum et le chauffage dudit constituant à une température comprise entre 25°C et 95°C pour former une phase non aqueuse ;
• la dissolution et l'agitation d'au moins un tensioactif non ionique soluble dans l'eau ayant une valeur HLB dans l'échelle de 9 à 40, éventuellement avec un co-tensioactif, dans l'eau pour obtenir une phase aqueuse ;
• le mélange et l'homogénéisation de la phase non-aqueuse avec la phase aqueuse pour obtenir une microémulsion ; et
• la dispersion de la microémulsion dans toute la masse de la solution de filage polymère de viscose pour obtenir une masse préforme dans laquelle le constituant insoluble dans l'eau est sous la forme d'une répartition régulière des microréservoirs.
